# FASCICULE DE BREVET EUROPEEN

(11) **EP 1 682 331 B1**
(45) Date de publication et mention de la délivrance du brevet: **14.05.2008**
(21) Numéro de dépôt: 04805406.8
(22) Date de dépôt: 08.11.2004
(51) Int. Cl.: B29C 55/22, B29C 61/08, B65D 41/24

(54) **Procédé de fabrication de capsules à jupe thermorétractable**
Verfahren zur Herstellung von Kapseln mit einer wärmeschrumpfbaren Schürze
Method for the production of capsules with heat-shrinkable skirt

(30) Priorité: 10.11.2003 FR 0313193
(43) Date de publication de la demande: 26.07.2006
(73) Titulaire: Alcan Packaging Capsules, 75218 Paris cedex 16 (FR)
(72) Inventeur: GRANGER, Jacques, F-33350 Sainte Terre (FR); LUCIANI, André, F-38470 Teche (FR)
(74) Mandataire: Pigasse, Daniel
(86) Numéro de dépôt international: PCT/FR2004/002862
(87) Numéro de publication internationale: WO 2005/046969

(56) Documents cités:
- DE-A- 2 320 343
- FR-A- 805 771
- FR-A- 988 665
- FR-A- 2 201 957
- GB-A- 1 380 397
- US-A- 4 576 207

## Description

### DOMAINE DE L'INVENTION

L'invention concerne le domaine des capsules de bouchage de récipients ou de bouteilles ou de sur-bouchage de récipients ou de bouteilles préalablement fermées par un bouchon, un opercule ou tout autre moyen de bouchage.
Plus particulièrement, l'invention concerne le domaine des capsules à jupe thermorétractable, c'est-à-dire des capsules formées d'une matière thermoplastique qui, durant le capsulage, sont rétreintes sur le goulot par apport d'énergie thermique, par opposition aux capsules de sur-bouchage métalliques dont la jupe est sertie sous la bague de verrerie du goulot durant le capsulage.
Plus spécifiquement, l'invention concerne un nouveau procédé de fabrication de capsules à jupe thermorétractable, capsules de sur-bouchage, et éventuellement capsules de bouchage, à jupe thermorétractable.

### ETAT DE LA TECHNIQUE

On connaît depuis longtemps des capsules thermorétractables (TR en abrégé).
Ainsi, le brevet FR 805.771 décrit la fabrication d'une capsule à base de PVC formée par extrusion d'un tube à base de PVC, puis, après allongement éventuel, expansion du tube en sortie d'extrudeuse, refroidissement et tronçonnage en portions de tubes cylindriques formant un manchon rétractable sur le goulot d'une bouteille.

Le brevet GB 1,015,713 décrit aussi un procédé de fabrication de capsules TR dans lequel un tube, en matériau à base de PVC ou de PS et rendu thermorétractable par expansion, est aplati et thermoscellé transversalement à une extrémité de manière à l'obturer, et tronçonné, de manière à former une capsule aplatie, qui, après écartement, forme une capsule à tête soudée qui peut être placée et thermorétractée sur un goulot de bouteille.

Le brevet FR 1.372.805 décrit aussi un procédé de fabrication de manchons tubulaires thermorétractables pouvant servir à sceller des capsules de bouteille, dans lequel un tube est coextrudé en deux PE (un relativement fusible et un relativement infusible), puis réticulé par irradiation, puis expansé.

Le brevet FR 1.424.731 décrit aussi un procédé de fabrication de capsules TR dans lequel une portion de tube thermorétractable est rétractée sur un gabarit surmonté d'un disque de manière à former une capsule thermorétractable dont la tête est formée par ledit disque.

Le brevet FR 1.441.623 décrit un procédé de fabrication de gaine thermorétractable par extrusion de PE, suivie d'une réticulation par irradiation, puis d'une expansion de la gaine.

Le brevet FR 2.115.137 décrit aussi un procédé de fabrication de capsules TR dans lequel on forme un flan découpé dans une feuille plastique thermorétractable, et dans lequel on forme une capsule TR roulée en soudant les bords latéraux par recouvrement sensiblement axial. Une tête de capsule peut également être collée. Cette capsule peut être combinée avec un bouchon de bouteille.

Le brevet FR 2.201.957 décrit aussi un procédé de fabrication de capsules thermorétractables selon le préambule de la revendication 1.

Le brevet FR 2.219.080 décrit aussi une capsule TR formée par thermorétraction sur mandrin d'une partie tubulaire en PVC ou en PS, l'extrémité formant la tête de la capsule étant obtenue par tassement et compression d'une portion de longueur de ladite partie tubulaire.

Le brevet US 5,118,460 décrit un procédé de fabrication de capsules TR par moulage.
De même, le brevet FR 2 708 513 décrit un procédé de fabrication de capsules TR dans lequel on forme d'abord par moulage une préforme, que l'on expanse ensuite.

On connaît aussi le brevet français FR 2 817 193 au nom de la demanderesse qui décrit un procédé de fabrication de capsules TR qui utilise un moyen d'irradiation.

### PROBLEMES POSES

Les capsules ou coiffes à jupe thermorétractable connues, et notamment celles décrites dans le brevet français FR 2 817 193, présentent plusieurs inconvénients :
- d'une part, elles font appel à un dispositif d'irradiation, ce qui présente à la fois un coût d'investissement et un coût de fonctionnement. En outre, même si techniquement les capsules ainsi fabriquées sont sans risque pour l'utilisateur, il est de fait qu'associer "irradiation" et un moyen de conditionnement d'une boisson peut soulever quelques réticences de la part des utilisateurs, même si elles sont injustifiées,
- d'autre part, il a été observé que les capsules, typiquement imprimées, et une fois thermorétractées sur les goulots, présentaient des problèmes de stabilité dimensionnelle axiale, avec des déformations qui altéraient l'impression,
- en outre, la productivité horaire du procédé a été trouvée trop faible,
- enfin, le procédé connu ne présente pas une souplesse suffisante pour répondre à la diversité des nouveaux besoins, tant en ce qui concerne les propriétés sensorielles des capsules, telles que les textures, le toucher ou encore la sonorité lors de l'utilisation ou de tout contact, de manière à obtenir en particulier des propriétés sensorielles proches des diverses capsules considérées comme le haut de gamme sur le marché.
Toutes ces capsules doivent par ailleurs présenter une facilité d'ouverture de la capsule - sans que la capsule soit dotée pour autant de moyens d'ouverture facile, que ce soit par découpage au couteau de la partie supérieure de la capsule, ou par "pelage" au couteau de la capsule depuis sa partie inférieure, en fonction de la tradition de chaque pays, et cela sans risque de blessure.

### DESCRIPTION DE L'INVENTION

L'invention concerne un procédé de fabrication de capsules ou coiffes à jupe thermorétractable selon la revendication 1.

Pour des raisons de productivité notamment, et pour avoir un débit d'extrudeuse élevé, il est avantageux d'avoir D0 > D1. En outre, il est également avantageux d'avoir D1 relativement faible pour obtenir un rapport D2/D1 relativement élevé afin d'avoir une capsule qui se rétracte thermiquement. Cependant, rien ne s'opposerait à avoir D0 et D1 sensiblement égaux.
Le rapport S0/S1 est une mesure de l'étirage axial, le débit de matière égal à S.V restant constant, V étant la vitesse linéaire, de sorte que, quand S diminue, la vitesse V du tube augmente en conséquence.
Par contre, en cas d'expansion radiale pure, seul le diamètre D augmente, l'aire S et la vitesse V n'étant pas alors modifiés.
On a pu mesurer la vitesse instantanée V en différents points du tube de matière thermoplastique, par exemple par projection sur le tube extrudé juste en sortie d'extrudeuse, de marques colorées régulièrement espacées de Δl₀ selon la direction axiale, de sorte que la mesure à l'aide d'un dispositif stroboscopique de Δ1₁ et Δ1₂ permet de calculer V1 et V2, connaissant V0, la vitesse du flux de matière ou du tube extrudé en sortie d'extrudeuse.

Ce procédé permet de résoudre les problèmes posés. En effet, d'une part, ce procédé n'utilise aucun dispositif d'irradiation, de sorte que se trouve écarté l'inconvénient du procédé antérieur mis au point par la demanderesse, inconvénient lié notamment à l'image négative de tout type d'irradiation auprès du grand public.
D'autre part, il a été constaté que les capsules ou coiffes obtenues avec le procédé de l'invention, et imprimées, étaient faciles à thermorétracter et ne présentaient pas, après rétraction sur le goulot, de distorsion axiale du motif imprimé.

Enfin, le procédé selon l'invention a été testé avec un grand nombre de matières différentes et de combinaisons de matières thermoplastiques différentes, tant sous forme de matériau extrudé monocouche que sous forme de matériau co-extrudé bi- ou tri- couches, de sorte qu'il a été possible d'obtenir une grande variété de capsules ou coiffes différentes par le toucher, l'apparence, l'élasticité, la sonorité au contact avec un son plus ou moins mat ou cristallin, la souplesse et la facilité de découpe au couteau, etc....
Ainsi, le procédé selon l'invention permet notamment sinon toujours de reproduire les impressions sensorielles de tous les types de capsules ou coiffes existantes, du moins le plus souvent d'approcher ces impressions sensorielles et même de les enrichir d'impressions nouvelles, de sorte qu'il devient possible de proposer des produits "sur mesure", à la demande des clients.

### DESCRIPTION DES FIGURES

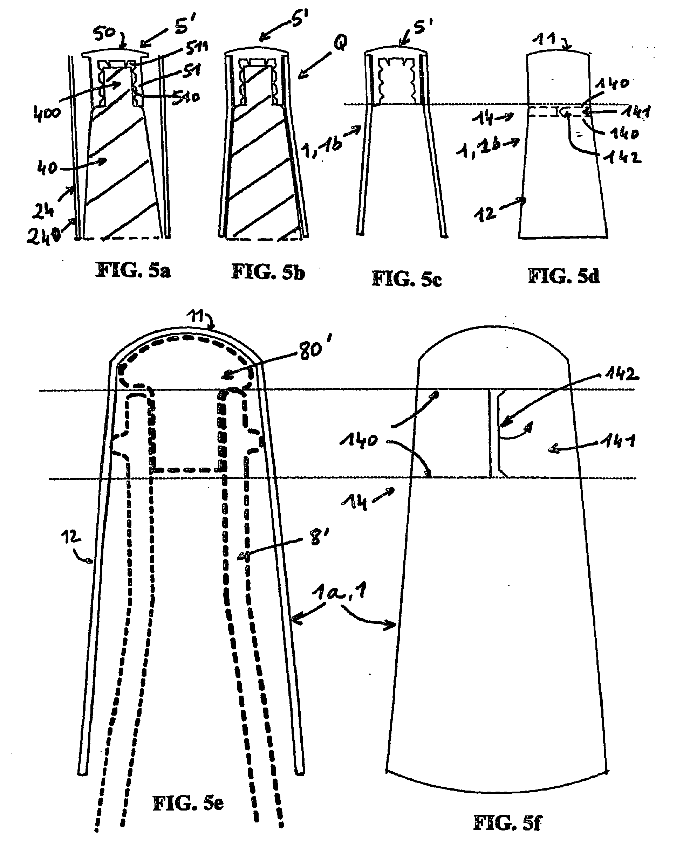

Toutes les figures sont relatives à l'invention.

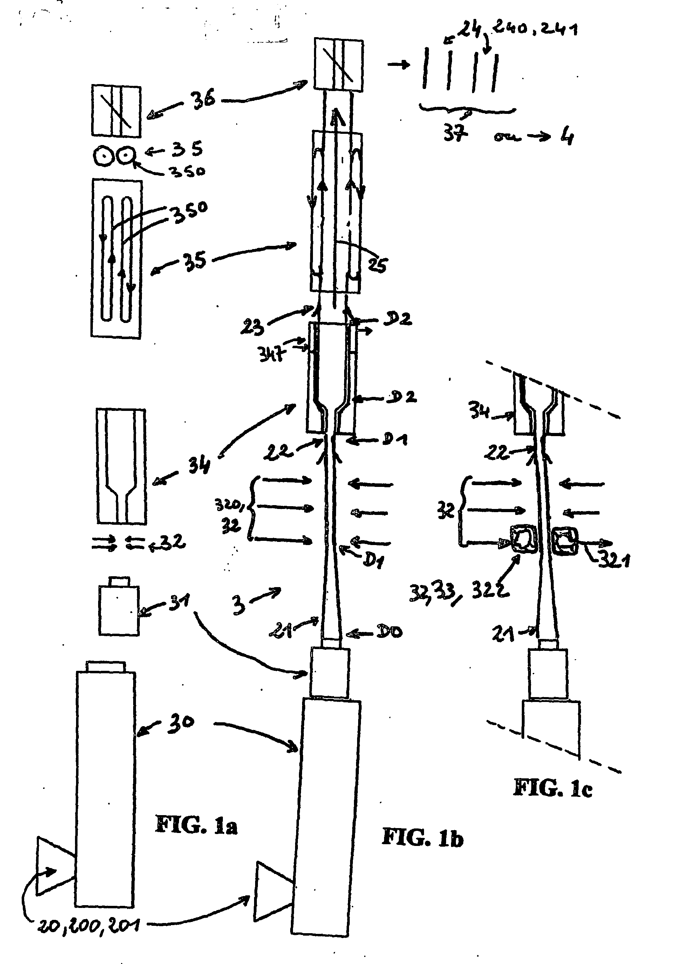

Les figures 1a à 3d sont relatives à la fabrication des portions de tubes (24).
   Sur la figure 1a, sont représentés de manière schématique les principaux équipements de la ligne de fabrication (3) de portions de tubes (24).
   La figure 1b illustre, parallèlement à la figure 1a, le procédé de fabrication et la ligne de fabrication (3) en fonctionnement.
   La figure 1c correspond à une vue partielle illustrant une variante du procédé et de la ligne de fabrication de la figure 1b. Dans cette variante, une bague (322) est interposée entre la filière (31) de l'extrudeuse (30) et le dispositif d'expansion radiale (34). Sur cette figure, cette bague est à la fois une bague de calibrage (33) calibrant le tube étiré axialement (22) au diamètre D1, et une bague de refroidissement (322) dotée d'une circulation d'eau (321).

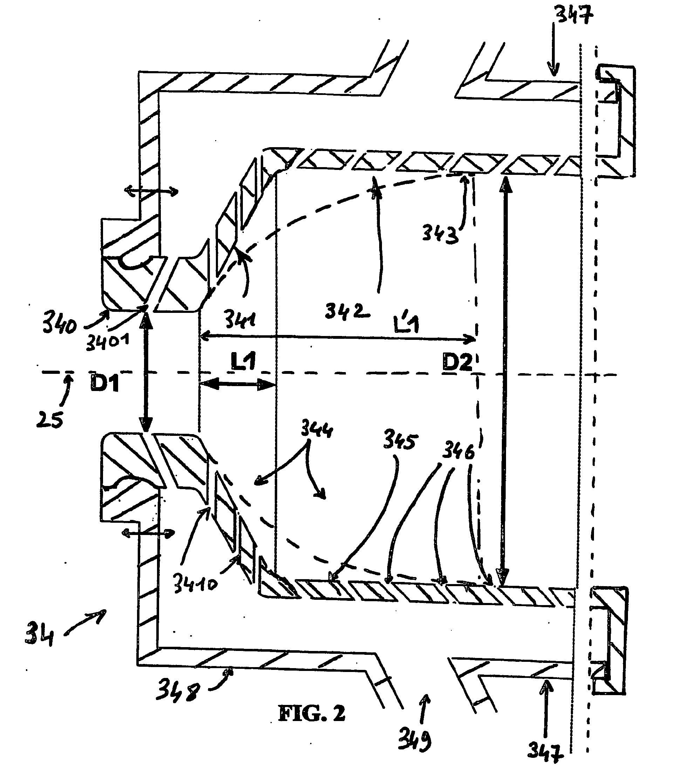

La figure 2 est une vue partielle du dispositif d'expansion radiale (34), vue en coupe selon la direction axiale (25) commune aux tubes extrudé (21), étiré axialement (22) et expansé (23). Sur cette figure, ledit tube étiré axialement (23) arrivant par la gauche, on distingue de gauche à droite : une bague d'entrée (340) de diamètre D1, pouvant servir de bague de calibrage, une zone d'expansion (341) dotée d'orifices (3410) et une paroi intérieure (342) de diamètre D2, ensemble formé par coopération d'une pièce métallique tubulaire intérieure (345) avec une chambre extérieure (348) dotée de prises de vide (349). La partie droite du dispositif d'expansion radiale (34) comprend un moyen de refroidissement auxiliaire (347), typiquement formé par une pulvérisation ou une circulation d'eau froide.

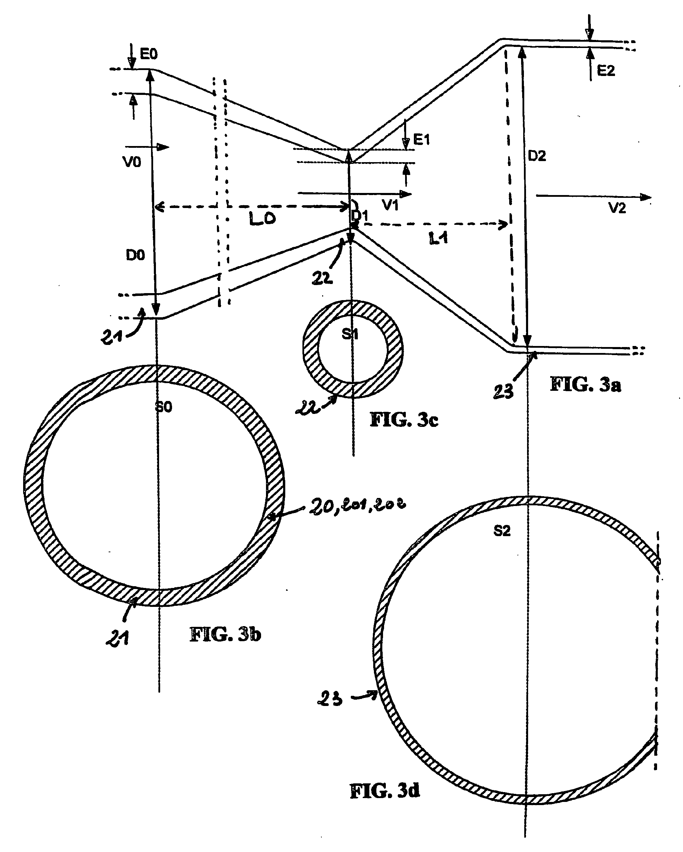

La figure 3a illustre, dans le cas où l'étape d'étirage axial s'étend de la sortie de filière (31) à l'entrée dudit dispositif d'expansion radiale (34), les évolutions de ladite matière thermoplastique (20) durant les différentes phases de la fabrication des portions de tubes (24), les équipements de la ligne de fabrication (3) n'étant pas repris, et avec de gauche à droite :
   - la phase d'extrusion qui produit en sortie de ladite filière (31) ledit tube extrudé (21) présente un diamètre D0, comme représenté en coupe sur la figure 3b,
   - la phase d'étirage axial qui conduit au tube étiré axialement (22) de diamètre D1, comme représenté en coupe sur la figure 3c,
   - la phase d'expansion radiale qui conduit au tube expansé radialement (23) de diamètre D2, comme représenté en coupe sur la figure 3d.
      On a porté sur la figure 3a les épaisseurs E et les vitesses linéaires V de la matière plastique selon ladite direction axiale (25).

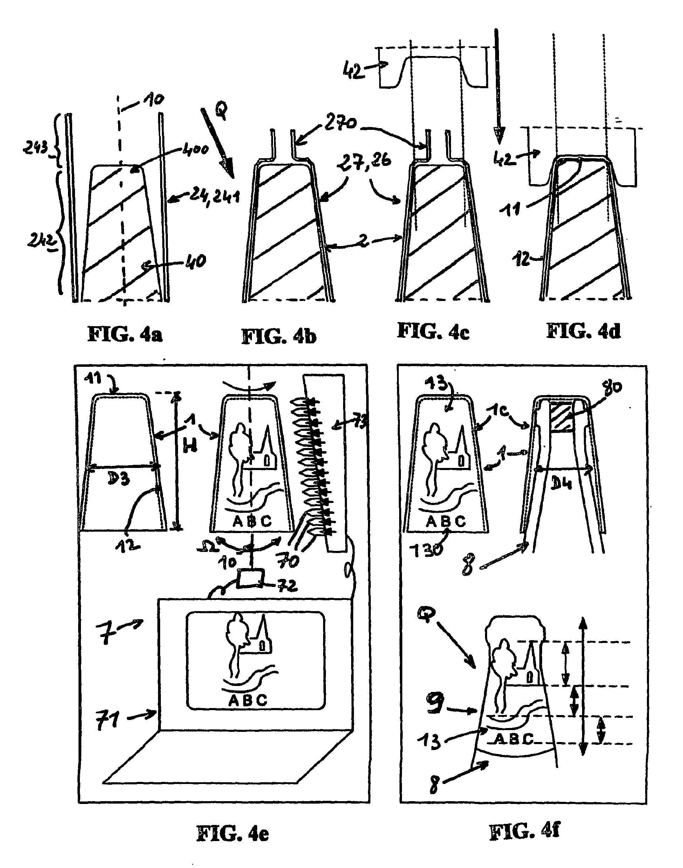

Les figures 4a à 7 illustrent la fabrication de capsules (1, 1b, 1c) ou de coiffes (1b) à partir des portions de tubes (24) fabriquées comme illustré sur les figures 1a à 3d.
Les figures 4a à 4d sont des vues en coupe selon ladite direction axiale (10), qui illustrent les différentes phases d'une modalité de procédé selon l'invention. Dans cette modalité, ladite portion de tube (24) est une portion "longue" (241) comprenant une partie inférieure (242) destinée à former la jupe (12) et correspondant donc sensiblement à la hauteur H de la capsule ou de la coiffe, et une partie supérieure (243) destinée à former la tête (11).
   La figure 4a représente la position initiale de ladite portion longue (241) par rapport au mandrin de conformation (40) et à sa tête (400).
   La figure 4b représente l'ébauche (26, 27) après thermorétraction de ladite portion longue (241), obtenue par un apport de chaleur Q, ébauche qui comprend une partie supérieure (270) située au-dessus de la tête (400) du mandrin (40).
   Les figures 4c et 4d représentent la formation de la tête (11) par compression de ladite partie supérieure (270) entre la tête (400) du mandrin (40) et une matrice (42) à déplacement relatif par rapport audit mandrin (40) selon ladite direction axiale (10).
   La capsule finale (1, 1a, 1b, 1c) a été représentée sur la figure 4e (en haut à gauche) en vue de côté (la vue en coupe correspond à la ligne en pointillés), figure qui illustre l'impression d'une capsule par un dispositif d'impression (7) comprenant une pluralité de buses d'impression (70) qui projettent des encres sur ladite capsule (1, 1a, 1b, 1c) disposée sur un support rotatif non représenté couplé à un moteur (72), typiquement pas à pas, chacune des buses d'impression (70) est dotée d'une micro-vanne dont l'ouverture / la fermeture est pilotée par un ordinateur en fonction des coordonnées du point considéré du motif imprimé (130) à reproduire, soit la hauteur H et la coordonnée angulaire Ω, motif mis en mémoire dans l'ordinateur (71), comme représenté sur l'écran de l'ordinateur (71). La pluralité de buses (70) forme une tête ou rampe (73) typiquement fixe par rapport à l'axe de rotation (10), la rotation de la capsule et l'ouverture / la fermeture des buses (70) étant synchronisées par l'ordinateur (71). Les buses (70) peuvent être groupées par trois, chacune des trois assurant la projection d'une couleur primaire (jaune, magenta et cyan), deux buses complémentaires pouvant projeter une encre blanche et une encre noire, de manière à pouvoir reproduire un très grand nombre de nuances par trichromie.
   Selon la finesse recherchée, on choisit une densité de buses par mm plus ou moins importante.
La figure 4f représente en haut à gauche la capsule (1) imprimée obtenue comme illustré sur la figure 4e.
   Elle représente en haut à droite, la même capsule, capsule de surbouchage(1c), placée sur un goulot (8) fermé par un bouchon (80).
   Elle représente en bas la capsule de surbouchage (9) thermorétractée sur ledit goulot (8) par un apport de chaleur Q.
Les figures 5a à 5d illustrent une autre modalité de capsule (1) selon l'invention dans laquelle ladite capsule comprend un insert (5') comprenant une tête (50) et une jupe (51). Comme illustré sur la figure 5a, analogue à la figure 4a, l'insert (5') est placé sur la tête (400) du mandrin (40).
   Comme illustré sur la figure 5b, analogue à la figure 4b, la portion de tube (24) est thermorétractée sur la jupe (51) de l'insert et la portion de jupe rétractée est ainsi, ou éventuellement grâce à une couche adhésive, solidarisée à l'insert (5'), de manière à former la capsule (1, 1b) représentée en coupe également sur la figure 5c. La figure 5d est une vue de côté de la capsule de bouchage (1b) après avoir doté la jupe (12) d'un moyen d'ouverture facile (14) comprenant deux lignes d'affaiblissement typiquement parallèles (140), lignes qui délimitent une languette d'ouverture (141) qui est déchirée lors d'une première ouverture en tirant sur son bout de préhension (142).
Les figures 5e et 5f sont relatives au cas où la capsule (1) est une coiffe (1a) pour goulot de bouteille de champagne (8') fermée par un bouchon à tête (80').
   La figure 5e est une vue en coupe, alors que la figure 5f est une vue de côté analogue à la figure 5d, la coiffe comprenant un moyen d'ouverture facile (14) comprenant deux lignes d'affaiblissement (140) espacées.

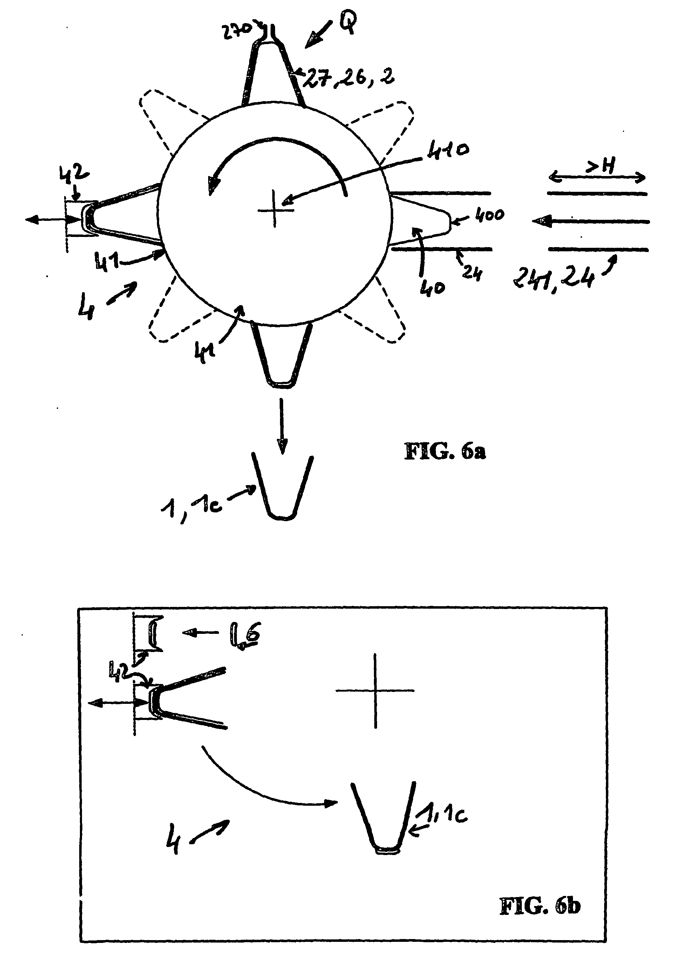

Les figures 6a à 7 illustrent diverses modalités du procédé et du dispositif correspondant (4) de mise en forme des portions de tube (24). Le dispositif (4) comprend typiquement un carrousel (41), à axe de rotation (410) vertical ou horizontal, comprenant typiquement de 4 à 8 mandrins, avec 4 à 8 positions angulaires correspondantes.
   Sur la figure 6a, on a représenté un carrousel (4) comprenant en trait plein 4 mandrins et 4 positions angulaires :
   - à la position droite, s'effectue le chargement des portions longues de tube (24, 241),
   - à la position haute, s'effectue la thermorétraction par apport de chaleur Q,
   - à la position gauche, s'effectue le moulage de la tête (11) par compression de la partie supérieure (270) entre la matrice (42) et la tête (400) du mandrin (40),
   - à la position basse, la capsule (1) est éjectée.
La figure 6b est une représentation partielle de la figure 6a pour illustrer une variante dans laquelle on introduit une pièce auxiliaire (6) dans la matrice (42) afin de la thermosceller sur la tête (11) formée lors de la compression à ladite position gauche.

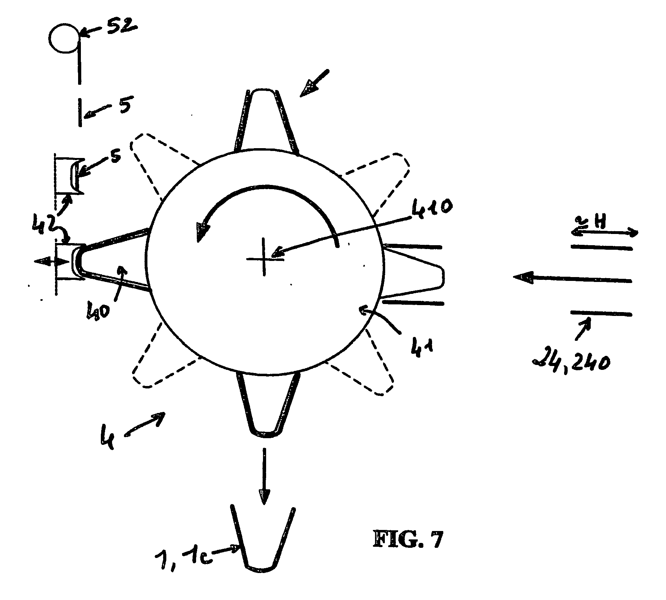

La figure 7 est analogue à la figure 6a et illustre une variante dans laquelle, à la position dite droite, on charge des portions courtes de tube (24, 240), et à la position dite gauche, on approvisionne des pastilles (5) dans ladite matrice (42), pastilles formées à partir d'un matériau en bande (52).

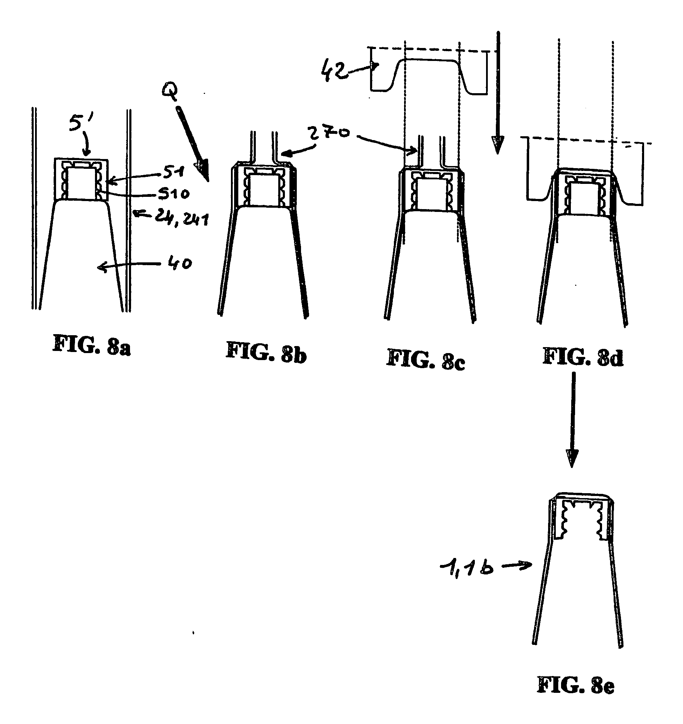

Les figures 8a à 8d, analogues aux figures 4a à 4d, sont relatives à une variante du procédé décrit aux figures 5a à 5d pour fabriquer des capsules (1b) de bouchage, la tête (50) de l'insert fileté (5') étant, dans le cas des figures 8a à 8d, totalement recouverte par la couche de matière thermoplastique formée par compression de la partie supérieure (243) de la portion longue de tube (24, 241).
   La figure 8e est une vue en coupe de la capsule finale (1b).

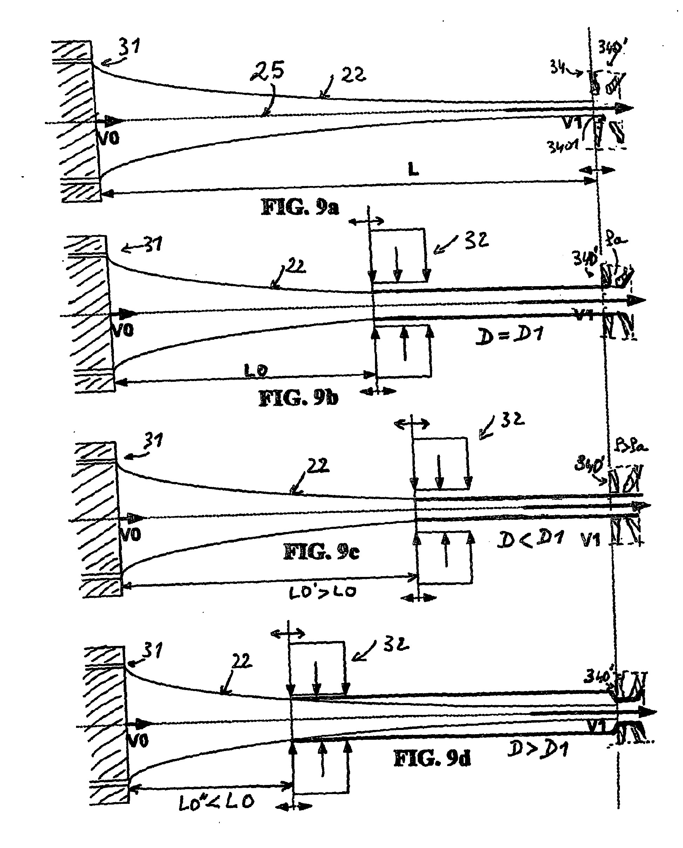

Les figures 9a à 9d sont des vues schématiques en coupe axiale du tube étiré axialement (22), représenté entre la sortie de ladite filière (31) et ledit dispositif d'expansion radiale (34).
   Sur la figure 9a, ledit tube étiré axialement (22) est représenté sans dispositif de refroidissement (32), avec un diamètre D qui décroît selon sensiblement une portion d'hyperbole en fonction de la distance axiale, ledit dispositif d'expansion radiale (34) étant mobile par rapport à ladite filière (31) de manière à ajuster la distance L entre ladite filière (31) et ledit dispositif d'expansion radiale (34) pour que ledit diamètre du tube étiré axialement corresponde au diamètre d'entrée D1 dudit dispositif d'expansion radiale (34).
Sur les figures 9b à 9d, un moyen ou dispositif de refroidissement (32) est interposé entre ladite filière (31) et ledit dispositif d'expansion radiale (34), ledit dispositif de refroidissement (32) figeant le diamètre du tube à la valeur du diamètre D correspondant sensiblement à la distance axiale L0 dans ladite portion d'hyperbole de la figure 9a.
   Sur la figure 9b, le dispositif de refroidissement (32) est placé à la distance L0 de ladite filière - ou à la distance L-L0 dudit dispositif d'expansion radiale (34), de manière à ce que le diamètre D corresponde au diamètre D1 d'entrée dudit dispositif d'expansion radiale (34).
   La figure 9c représente le cas où le dispositif de refroidissement (32) a été positionné à une distance axiale > L0, ce qui entraîne D < D1. Le tube étiré axialement (22) ne plaque pas contre la bague ou couronne d'entrée dudit dispositif d'expansion radiale (34), d'où l'apparition d'un problème d'expansion radiale.
   La figure 9d représente le cas où le dispositif de refroidissement (32) a été positionné à une distance axiale < L0, ce qui entraîne D > D1. Le tube étiré axialement (22) présentant un diamètre significativement supérieur à celui de la bague (340) ou chambre annulaire (340') à l'entrée dudit dispositif d'expansion radiale (34), il en résulte un problème d'effort axial élevé à exercer sur ledit tube étiré axialement (22), ladite bague (340) ou chambre annulaire (340') formant alors un goulot d'étranglement pour ledit tube étiré axialement (22), une augmentation de l'effort de traction axiale pouvant entraîner notamment un étirage axial indésirable lors de l'étape b) d'expansion radiale.

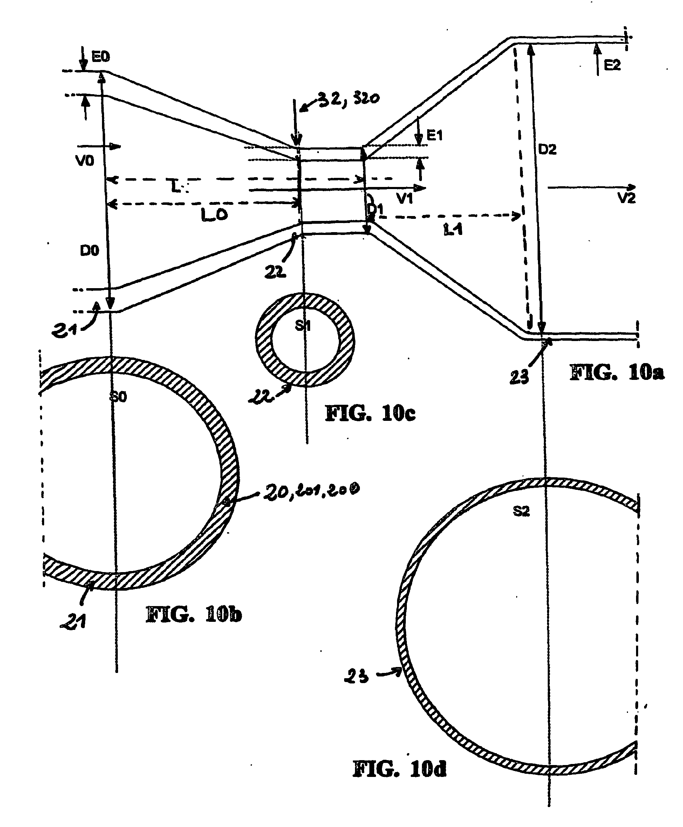

Les figures 10a à 10d sont analogues aux figures 3a à 3d et illustrent le cas où ladite étape d'étirage axial est délimitée, en aval, par une zone de refroidissement dans laquelle un moyen de refroidissement (32) fige le diamètre dudit tube étiré axialement (22) à un diamètre D1.

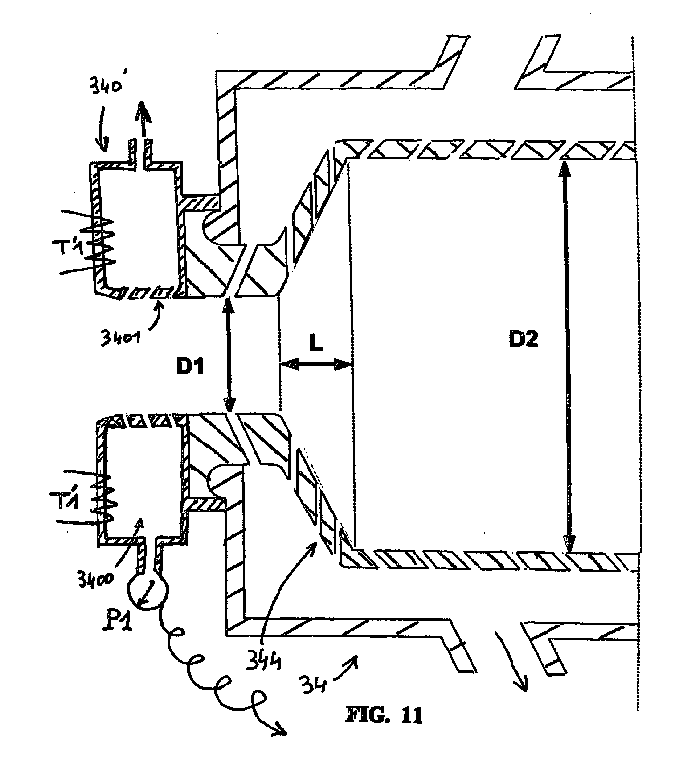

La figure 11, analogue à la figure 2, illustre le cas où ledit dispositif d'expansion radiale (34) comprend comme bague d'entrée (340) une chambre annulaire (340') formant une chambre d'aspiration (3400) dotée d'une portion tubulaire ajourée (3401), typiquement amovible par rapport audit dispositif d'expansion radiale (24), permettant un contrôle de la température de ladite bague d'entrée en vue de réchauffer ou de refroidir ledit tube étiré axialement (22) à l'entrée dudit dispositif d'expansion radiale (34), et un contrôle de la pression dans ladite chambre d'aspiration, de manière à évaluer si ledit tube étiré axialement est aspiré par ladite chambre d'aspiration (3400) en étant plaqué contre ladite portion tubulaire ajourée (3401).

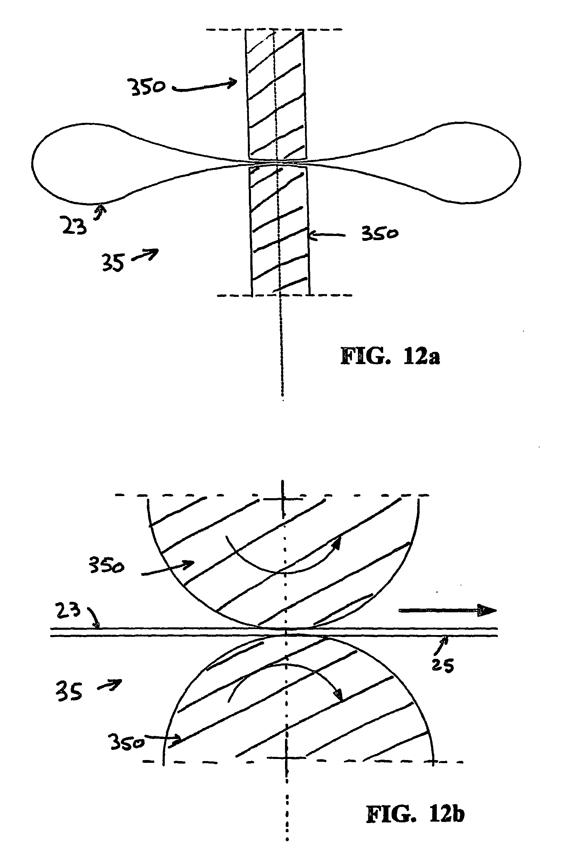

Les figures 12a et 12b sont des vues partielles relatives au moyen de traction axiale (35) formé par deux roulettes motrices (350) en regard.
   La figure 12a est une vue en coupe dans un plan vertical perpendiculaire à ladite direction axiale (25).
   La figure 12b est une vue en coupe dans un plan vertical contenant ladite direction axiale (25).

### DESCRIPTION DETAILLEE DE L'INVENTION

Selon l'invention, ladite étape d'étirage axial peut être délimitée, en aval, par une zone de refroidissement dans laquelle un moyen de refroidissement (32) abaisse la température dudit tube étiré axialement (22) à une température T1, ladite température T1 étant choisie :
a) assez élevée pour être au moins égale à la température de transition vitreuse Tg ou à la température de fusion Tf de ladite matière thermoplastique, de manière à pouvoir mettre en oeuvre ladite étape d'expansion radiale subséquente,
b) assez basse pour interrompre ladite étape d'étirage axial et ainsi figer le diamètre dudit tube étiré axialement (22) à un diamètre D1 typiquement prédéterminé. Ladite température T1 peut être telle que ΔT, égal à T0-T1, aille de 30° à 150°C et typiquement de 45° à 100°.
   Comme illustré sur la figure 1b ou sur les figures 9b à 9d, ledit moyen de refroidissement peut comprendre une projection extérieure d'air ou d'eau, typiquement annulaire (320), représentée par une pluralité de flèches parallèles sur les figures 1b, et 9b à 9d.

Comme illustré sur la figure 1c, ledit moyen de refroidissement peut comprendre une bague (322) refroidie à l'air ou à l'eau.
Dans ce cas, ladite bague peut comprendre une partie de diamètre D1, de manière à former une bague de calibrage (33) de laquelle sort un tube de diamètre D1, typiquement étiré axialement et refroidi à la température T1.

Selon une autre variante de moyen de refroidissement (non illustré sur une figure), ledit moyen de refroidissement peut comprendre une projection d'air ou d'eau à l'intérieur dudit tube étiré axialement, typiquement grâce à un conduit traversant ladite filière.

L'abaissement de température ΔT obtenu dans la zone de refroidissement, tout comme par ailleurs l'étirage axial, entraîne une augmentation des caractéristiques mécaniques du tube étiré (22), ce qui est avantageux dans un procédé où une traction est exercée sur le tube en bout de ligne de production. Cependant, comme l'étape d'expansion radiale qui suit l'étape d'étirage axial implique une grande déformation du tube, déformation qui suppose une faible rigidité du tube étiré (22) à l'entrée du dispositif d'expansion radiale (34), cet abaissement de température ΔT doit être contrôlé et limité.

Quelle que soit la modalité de refroidissement, ledit moyen de refroidissement, qui s'applique après ladite étape d'étirage axial en sortie d'extrudeuse sur la longueur L0, tend à figer le diamètre du tube étiré axialement, comme cela a été illustré sur les figures 9a à 9d.
La longueur L0 correspondant audit étirage axial peut être typiquement comprise entre 0,2 m et 2 m. On peut noter que, sur toute cette longueur L0, de nombreuses grandeurs physiques varient et présentent donc un gradient, qu'il s'agisse du diamètre D, de l'épaisseur E, ou de la vitesse V du tube.

Comme illustré sur les figures 1b, 1c, 2 et 11, ledit dispositif d'expansion radiale (34), alimenté en amont en tube étiré axialement (22) à ladite température T1, peut comprendre une chambre d'expansion radiale (344) dotée d'abord d'une zone d'expansion (341) destinée à faire passer ledit tube étiré axialement (22) du diamètre D1 au diamètre D2, puis d'une paroi intérieure (342) de diamètre D2 raccordée en amont à ladite zone d'expansion (341).

Comme illustré sur la figure 2, ledit dispositif d'expansion radiale peut comprendre en amont une bague d'entrée (340), typiquement de diamètre D1, de manière à avoir un tube étiré axialement (22) de diamètre D1 à profil régulier avant ladite expansion radiale.

Comme illustré sur la figurer 11, ladite bague d'entrée (340) peut former une chambre annulaire (340'), typiquement un anneau, de surface intérieure de diamètre intérieur D1, ladite surface intérieure comprenant une pluralité d'orifices (3401) de mise sous vide, ladite chambre annulaire étant mise sous une pression Pa < P atmosphérique, de manière à plaquer ledit tube étiré axialement (22) contre ladite surface intérieure.
En effet, cette chambre annulaire (340') peut permettre d'une part de réguler le diamètre dudit tube (22) étiré axialement, par contrôle de la pression Pa, pression qui tend à augmenter en présence d'un défaut de placage, l'air extérieur pouvant alors passer par les orifices (3401) ; elle peut permettre d'autre part de réchauffer, si besoin est, ledit tube (22) avant son entrée dans la zone d'expansion (341), grâce à un moyen de chauffage de ladite chambre annulaire symbolisé par une résistance électrique (T'1) sur la figure 11.
Ainsi, la température dudit tube étiré axialement (22) peut être finement ajustée afin de faciliter son expansion dans ladite zone d'expansion (341).

Ladite expansion radiale peut être obtenue soit en maintenant sous pression l'intérieur dudit tube (21, 22, 23), soit en maintenant sous dépression l'extérieur dudit tube (23).
Ladite expansion radiale peut être obtenue de préférence en maintenant sous dépression ledit tube (23), ledit dispositif d'expansion radiale (34) comprenant une paroi intérieure aspirante (343) au moyen de trous (346) mis sous vide, de manière à ce que ledit tube de diamètre D1 se plaque contre ladite paroi intérieure de ladite zone d'expansion (341) et/ou contre la paroi intérieure (342) de diamètre intérieur D2, ladite température T1 étant choisie aussi basse que possible de manière à obtenir une thermorétraction élevée, mais cependant assez haute pour permettre ladite expansion radiale.

Ladite paroi intérieure (342) de diamètre D2 peut être une pièce métallique tubulaire (345), typiquement une pièce en acier, aluminium, en alliage de cuivre, tel que le bronze
ou un alliage de cupro-nickel, ladite pièce (345) pouvant être une pièce frittée apte à laisser passer l'air.
Cette paroi intérieure peut être traitée en surface, que ce soit pour minimiser les forces de frottement entre ladite paroi intérieure (342) et ledit tube (23), ladite paroi intérieure pouvant être revêtue au moins en partie de PTFE, ou pour donner audit tube un aspect de surface particulier, typiquement un aspect satiné ou un aspect "poli-glace", ladite paroi intérieure comprenant un relief ou une rugosité de surface apte à être donner ledit aspect.

Typiquement, ladite étape d'expansion radiale peut assurer, dans ladite zone d'expansion (341), une augmentation de diamètre de D 1 à D2 ou ΔD=D2-D1 d'au moins 10 mm, sur une distance L1 inférieure à 250 mm, et typiquement inférieure à 100 mm, de manière à avoir le rapport ΔD/L1 le plus élevé possible et typiquement supérieur à 1/25, et qu'ainsi ladite expansion radiale comprenne une composante d'expansion axiale faible ou négligeable. La limite supérieure du rapport ΔD/L1 varie avec la matière thermoplastique formant le tube ; elle peut être typiquement de l'ordre de 3.
C'est grâce à cette séparation entre étirage axial préalable et expansion radiale subséquente, que les capsules selon l'invention peuvent se rétracter sur un goulot uniquement de manière radiale, sans modification sensible de la composante axiale selon la hauteur des capsules, de sorte que la position axiale de ces capsules sur goulot reste inchangée après thermorétraction, et que toute image imprimée sur ces capsules reste également intacte selon la direction axiale.

Selon l'invention, et comme illustré sur la figure 1b, ladite étape d'expansion radiale peut comprendre un refroidissement auxiliaire grâce à un moyen de refroidissement auxiliaire (347), de manière à avoir, en sortie dudit dispositif d'expansion radiale (34), un tube expansé radialement (23) à une température T2 typiquement comprise entre 10°C et 60°C, et typiquement à la température ambiante, ledit moyen de refroidissement auxiliaire (347) comprenant typiquement un refroidissement de ladite pièce métallique tubulaire (345) ou de ladite paroi intérieure (342) de diamètre D2, ladite température T2 devant être assez basse pour que le tube obtenu en sortie dudit dispositif d'expansion radiale (34) puisse être tiré par ledit moyen de traction axiale (35) sans risque de rupture
ou d'allongement dudit tube expansé radialement (23) de diamètre D2.
Ladite pièce métallique tubulaire et ladite paroi intérieure peuvent ainsi présenter un gradient de température, avec une entrée de diamètre D1 relativement chaude et une sortie de diamètre D2 relativement froide.

Selon l'invention, le diamètre D0 de ladite filière formant ledit tube extrudé (21) peut aller typiquement de 20 mm à 50 mm, et sa largeur de fente ou épaisseur E0 peut aller typiquement de 0,5 mm à 3 mm, de manière à avoir un débit de matière plastique de l'extrudeuse (30) allant typiquement de 10 kg à 100 kg de matière plastique à l'heure.
De même, ledit diamètre D1 dudit tube étiré axialement (22) peut aller typiquement de 5 à 20 mm, et son épaisseur E1 va typiquement de 0,2 mm à 0,6 mm, avec un rapport D1/D0 au plus égal à 0,6, et avec un rapport E1/E0 au plus égal à 0,6.
Ledit diamètre D2 dudit tube expansé radialement (23) peut aller typiquement de 20 mm à 50 mm et son épaisseur E2 va de 0,05 mm à 0,35 mm, et typiquement de 0,075 mm à 0,15 mm, avec un rapport D2/D1 au moins égal à 2 et avec un rapport E2/E1 au plus égal à 0,6.

Comme illustré sur la figure 9a, ledit dispositif d'expansion radiale (34) peut être placé à une distance L de ladite filière, ledit dispositif d'expansion radiale (34) étant typiquement mobile selon la dite direction axiale (25), ladite distance L étant choisie, notamment en fonction de ladite matière plastique, de manière à obtenir un niveau d'étirage axial suffisant et de manière à obtenir un refroidissement suffisant dudit tube étiré axialement (22).
La mobilité axiale relative du dispositif d'expansion radiale (34) par rapport à ladite filière a été représentée par la double flèche "<-->".
De même, ledit moyen de refroidissement (32) peut être placé à une distance L0 < L de ladite filière, ladite distance L0 étant choisie, notamment en fonction de ladite matière plastique, de manière à obtenir un niveau d'étirage axial suffisant, ledit moyen de refroidissement étant typiquement mobile selon ladite direction axiale (25), de manière à obtenir une régulation du diamètre D1 à l'entrée dudit dispositif d'expansion radiale (34) par un déplacement ΔL0 dudit moyen de refroidissement autour de ladite distance L0.
La mobilité axiale relative dudit moyen de refroidissement (32) par rapport à ladite filière a été représentée par la double flèche "<-->" sur les figures 9b à 9d.

Selon le procédé de l'invention, et comme illustré sur les figures 9b à 9d, ledit dispositif d'expansion radiale peut comprendre ladite chambre annulaire (340') mise sous vide, à ladite pression Pa, et ledit déplacement ΔL0 peut être asservi notamment à ladite pression Pa, toute augmentation de pression Pa impliquant pour ledit tube étiré axialement un écart négatif ΔD1 de diamètre par rapport audit diamètre D1, ledit écart négatif ΔD1 pouvant être corrigé par un déplacement ΔL0 négatif de manière à augmenter de ΔD1 le diamètre dudit tube étiré axialement.
En outre, ledit déplacement ΔL0 peut être asservi notamment à la force de traction axiale Ft exercée par ledit moyen de traction, toute augmentation ou écart positif ΔFt de ladite force Ft impliquant typiquement un écart positif ΔD1 de diamètre dudit tube étiré axialement (22) (par rapport au diamètre D1 de la bague d'entrée (340, 340'), ledit tube étiré axialement (22) présentant alors un diamètre plus grand que le diamètre d'entrée dans ledit dispositif d'expansion radiale (34), ledit écart positif ΔFt pouvant être corrigé par un déplacement ΔL0 positif de manière à diminuer de ΔD1 le diamètre dudit tube étiré axialement.
Ainsi, cette modalité de procédé de fabrication selon l'invention est très avantageuse car elle comprend un moyen de régulation permanente, conduisant à une grande régularité de production, mais de plus, ce moyen de régulation réduit considérablement le temps de mise en route du procédé et également le temps de réglage lors d'un changement de matière plastique.

Selon l'invention, ladite matière thermoplastique (20) peut comprendre ou être constituée par au moins une dite première matière thermoplastique (200) présentant une température de transition vitreuse Tg au moins égale à 40°C, et typiquement choisie parmi : PET, PVC, PS, PMMA, ou leur mélange, ou copolymères de PET, PVC, PS, PMIVIA, de manière à obtenir des capsules de faible épaisseur qui aient une bonne tenue mécanique par elles-mêmes et qui soient aptes à être utilisées sur ligne de capsulage.

Cependant, ladite matière thermoplastique (20) peut comprendre ou être constituée par au moins une dite seconde matière thermoplastique (201) présentant une température de transition vitreuse Tg inférieure à 50°C et typiquement inférieure à 10°C, et typiquement choisie parmi les polyoléfines tels que le PE, PP, PB, ou parmi les copolymères d'éthylène tels que l'EVA, l'EMA, l'EAA, les copolymères d'éthylène et de propylène,
ou parmi les élastomères thermoplastiques tels que le SIS, SEBS, ou leur mélange. Dans le cas où ladite seconde matière plastique serait seule utilisée, une épaisseur plus importante pourrait être nécessaire pour avoir une bonne tenue mécanique de la capsule.

Avantageusement, ladite matière thermoplastique (20) peut comprendre un mélange de ladite première matière thermoplastique (200) et de ladite seconde matière thermoplastique (201), ledit mélange comprenant au moins 50% en volume de ladite première matière thermoplastique (200), et de 10 à 50 % en volume de ladite seconde matière thermoplastique (201), de manière à obtenir des capsules (1, 1b, 1c) ou des coiffes (1a) présentant toute une palette de textures et de flexibilité en fonction de la teneur relative en lesdites première (200) et seconde (201) matières thermoplastiques.

Ainsi, l'invention peut être utilisée avec un grand nombre de matières thermoplastiques, pour autant que leurs caractéristiques mécaniques soient compatibles avec la formation de capsules. En effet, l'invention peut s'appliquer potentiellement à toute matière thermoplastique susceptible de s'étirer axialement et de s'expanser radialement selon l'invention.

Selon une modalité de l'invention, ladite matière thermoplastique (20) peut former ou comprendre un matériau multicouche, ledit matériau multicouche comprenant une dite première couche constituée de ladite première matière thermoplastique et une seconde couche constituée de ladite seconde matière thermoplastique, ledit matériau multicouche pouvant inclure une couche intérieure adhésive.

En outre, tout ou partie de ladite matière thermoplastique (20) peut contenir une charge micronisée typiquement choisie parmi le talc, le carbonate de calcium, le sulfate de baryum, l'oxyde de titane, les pigments organiques ou minéraux, les argiles nanoparticulaires, de manière à colorer ladite matière thermoplastique (20).

Ainsi, grâce à un vaste choix de matières plastique et de charges, notamment de charges minérales, l'invention offre des possibilités virtuellement infinies en ce qui concerne les propriétés sensorielles des capsules fabriquées, notamment les propriétés de toucher ou d'aspect, de "sonorité", de découpage au couteau, etc.....
Ces capsules ou coiffes peuvent présenter notamment une grande douceur de toucher, très différent du toucher habituel des matières plastiques, ou encore un toucher ou une main proches de ceux des capsules à base d'étain. La demanderesse a supposé que cela pouvait être en relation avec le mélange sans doute hétérogène de deux matières aux Tg différents.

Selon une modalité de l'invention, et comme illustré par exemple sur la figure 7, à l'étape c) de tronçonnage, ladite portion de tube (24) peut être une portion de tube dite "courte" (240), ladite longueur appropriée de ladite portion de tube (24) étant choisie typiquement voisine de la hauteur H de ladite capsule. Dans ce cas, à l'étape d) de mise en forme, on approvisionne une pastille (5), plane ou à rebord incurvé, destinée à former la tête (11) de ladite capsule (1, 1b, 1c) ou de ladite coiffe (1a), et dans lequel ladite pastille (5) est assemblée à ladite ébauche de jupe (26), typiquement par thermoscellage à l'aide d'une matrice (42) coopérant avec ledit mandrin (40), la coopération de ladite matrice (42) avec ledit mandrin (40) mettant éventuellement en forme ou en relief ladite pastille (5).
Ladite pastille (5) peut être obtenue par découpe d'un matériau en feuille (52), éventuellement transparent, en un matériau choisi parmi les matières plastiques, les bandes ou feuilles métalliques, le papier ou le carton ou des assemblages multicouches de ces matériaux. Cette modalité est avantageuse pour obtenir des capsules composites dont la tête (11) est de nature différente de la jupe (12).

Ladite pastille (5) peut éventuellement être constituée par une pastille fiscalisée. Cette pastille peut comprendre tous types de systèmes permettant notamment d'identifier la capsule, de suivre et d'assurer la traçabilité des produits conditionnés, de former un moyen anti-fraude et anti-vol.

Selon une autre modalité de l'invention illustrée sur les figures 5a à5c, et sur les figures 8a à 8e, ladite pastille (5) peut être remplacée par un insert (5') comprenant une tête (50) et éventuellement une jupe (51), ledit insert (5') étant placé à l'extrémité supérieure dudit mandrin de conformation (40), typiquement avant thermorétraction de ladite portion de tube (24), de manière à assembler ledit insert (5') à ladite ébauche de jupe thermorétractée (26), éventuellement à l'aide d'une couche adhésive ou thermoscellante. Cet insert (5') est typiquement un insert moulé en matière thermoplastique, de sorte qu'il est possible d'avoir un assemblage de ladite portion "courte" (240) à son extrémité supérieure sur la jupe (51) de l'insert (5') grâce à l'apport de chaleur Q durant la rétractation thermique illustrée sur la figure 5b, ou éventuellement grâce à un apport thermique complémentaire dans la partie supérieure de la capsule.
Ledit insert (5') peut comprendre un filetage (510) et présenter un moyen d'étanchéité (511), de manière à former une capsule de bouchage (1b). Voir figure 5a.

Selon une autre modalité de procédé selon l'invention, et comme illustré sur la figure 6a, à l'étape c) de tronçonnage du procédé, ladite portion de tube peut être une portion dite "longue" (241), ladite longueur appropriée étant prise supérieure à la hauteur de ladite capsule, ladite portion de tube (241) comprenant une partie inférieure (242) destinée à former la jupe (12) de ladite capsule (1, 1b, 1c) ou de ladite coiffe (1a), et une partie supérieure (243) destinée à former la tête (11) de ladite capsule (1, 1b, 1c) ou de ladite coiffe (1a), ladite tête (11) étant formée par compression ou moulage de ladite partie supérieure (243) entre une matrice (42) et une tête (400) dudit mandrin (40).
Dans cette modalité, la partie supérieure (243) présente une longueur calculée pour fournir la quantité suffisante de matière plastique pour former ladite tête (11) sans qu'il y ait de sur-épaisseur inutile ou de sous-épaisseur qui rendrait la capsule inutilisable.

Cependant, comme illustré sur les figures 8a à 8e, il est possible, en partant d'une portion "longue" (241), de former une capsule de bouchage (1b) dans laquelle l'insert (5') est recouvert en totalité par une couche de matière thermoplastique issue de ladite portion (24).

En outre, comme illustré sur la figure 6b, une pièce auxiliaire (6) formant typiquement un motif, un décor ou un moyen de fiscalisation, peut être introduite dans ladite matrice (42) avant ladite compression, de manière à former simultanément ladite tête (1) et à assembler à ladite tête (11) ladite pièce auxiliaire (6).
En effet, il est avantageux de profiter de la présence d'une matrice (42), qui peut être éventuellement chauffée, pour fixer un élément complémentaire sur la tête de la capsule, sans que cela entraîne une étape de plus dans le procédé.

Comme cela est habituel, les capsules (1) sont généralement décorées ou imprimées. Selon l'invention, ladite impression (13) peut être formée sur ladite portion de tube (24), et/ou sur ladite jupe (12), et/ou sur ladite tête (11), et/ou sur ladite ébauche de jupe thermorétractée (26), soit avant soit après avoir assemblé ou formé la tête (11) de ladite capsule (1, 1b, 1c) ou de ladite coiffe (1a).
En effet, l'invention rend possible l'impression des portions de tube (24) dans la mesure où elle permet d'éviter toute déformation axiale ultérieure, la déformation radiale durant la rétractation thermique sur le goulot étant en elle-même limitée par la géométrie du goulot, et par le fait que, comme illustré par exemple sur les figures 4e et 4f, le diamètre moyen D3 de la jupe (12) de la capsule est choisi en rapport avec la géométrie du goulot (8) à recouvrir, et de son diamètre minimum D4 du goulot (8), la jupe de capsule (1) après rétractation thermique devant avoir notamment ce diamètre D4, à l'épaisseur près de la capsule. Il importe que ce diamètre D4 soit encore supérieur à très supérieur au diamètre D1 du tube avant ladite expansion radiale, afin que la capsule soit effectivement bien plaquée sur la totalité du goulot à recouvrir.
Pour former ladite impression (13), on peut utiliser des encres réticulables sous rayonnement, typiquement des encres UV, de manière à ce que ladite impression (13) soit typiquement formée à une température inférieure à la température à laquelle la capsule se thermorétracte.

Comme représenté sur la figure 4e, ladite impression (13) peut être formée en utilisant un dispositif d'impression par jet d'encre (7) ou par transfert comprenant une pluralité de N buses d'impression (70) en parallèle selon ladite direction axiale ou hauteur H, ladite pluralité comprenant une densité de buses d'au moins 1 buse (70) par mm, ledit dispositif étant commandé typiquement par un ordinateur (71), doté de moyens de stockage numérique des motifs imprimés (130) à reproduire sur ladite capsule (1, 1b, 1c) ou sur ladite coiffe (1a), de manière à pouvoir imprimer simultanément plusieurs motifs (130) différents, à pouvoir changer sur le champ de motif imprimé (130), et ainsi à imprimer des séries de capsules (1, 1b, 1c) ou de coiffes (1a) éventuellement très courtes.
En disposant plusieurs rampes (73) de buses d'impression (70) en parallèle, il est possible de d'imprimer en parallèle des motifs identiques ou différents, ce qui rend le procédé particulièrement souple et avantageux, puisque l'impression peut être effectuée directement à partir d'un motif transmis par le client acheteur desdites capsules, et cela dès réception dudit motif.

Selon l'invention, tout ou partie de ladite matière thermoplastique (20, 200, 201) peut être colorée dans la masse. Dans ce cas, il s'agit de former soit une couleur de fond sur laquelle on forme ladite impression, soit de former éventuellement une capsule colorée mais non imprimée.

Avantageusement, ledit matériau multicouche peut comprendre une couche extérieure en une matière plastique, typiquement polaire ou à énergie de surface élevée, de manière à être apte à être imprimée en conduisant à un décor adhérent à ladite couche extérieure.
Il peut comprendre une couche intérieure constitue d'un adhésif activable, de manière à pouvoir coller localement la capsule sur le goulot, typiquement par chauffage local.

Comme illustré sur les figures 5d et 5f, ladite jupe (12) comprend un moyen d'ouverture facile (14) comprenant typiquement deux lignes d'affaiblissement (140) espacées pour former une languette d'ouverture (141) dotée d'un bout de préhension manuelle (142).
Traditionnellement, les capsules de surbouchage (1c) utilisées sur les bouteilles de vin fermées par un bouchon de liège, sont découpées au couteau et ne comprennent pas de moyen d'ouverture facile. Cependant, l'invention inclut tout type de capsule doté d'un moyen d'ouverture facile.

Comme illustré sur les figures 12a et 12b, ledit moyen de traction axiale (35) peut comprendre deux roulettes motrices (350) ou deux chenillettes.
La demanderesse a observé qu'il était possible d'effectuer la traction du tube expansé radialement (23) en utilisant au une paire de roulettes (350), le tube étant aplati à la sortie du dispositif d'expansion radiale (34), sans que cela soit préjudiciable à l'aspect de la capsule finale (1, 1a, 1c, 1c). Ce moyen de traction est avantageux notamment par sa simplicité et son faible encombrement.

Un autre objet de l'invention est constitué par des capsules de surbouchage thermorétractables (1c), obtenues selon le procédé de l'invention, et typiquement destinées à surboucher des goulots de bouteille obturé, de hauteur H comprise entre 20 et 100 mm et présentant une épaisseur de jupe (12) comprise entre 0,05 mm et 0,5 mm.

Un autre objet de l'invention est constitué par des capsules de surbouchage thermorétractables (1c) obtenues selon l'invention, de hauteur H comprise entre 20 et 60 mm et présentant une épaisseur de jupe (12) comprise entre 0,05 mm et 0,5 mm.

Un autre objet de l'invention est constitué par des capsules de bouchage thermorétractables (1b) obtenues selon l'invention. Ces capsules, qui comprennent un insert comme illustré sur les figures 5a à 5d, sont de hauteur H comprise entre 20 et 100 mm, et présentent une épaisseur de jupe (12) comprise entre 0,05 mm et 0,5 mm pour la partie inférieure de la jupe non assemblée audit insert (8).

Un autre objet de l'invention est constitué par des coiffes (1a) thermorétractables pour vins effervescents ou boissons carbonatées sous pression obtenues selon l'invention, de hauteur H comprise entre 60 et 200 mm, et présentant une épaisseur de jupe comprise entre 0,1 mm et 1,0 mm.
De telles coiffes (1a) ont été illustrées sur les figures 5e et 5f.

Un autre objet est constitué par des capsules (1, 1b, 1c) ou coiffes (1a) à jupe (12) en matière thermoplastique (20) thermorétractable, ladite tête (11) étant éventuellement en ladite matière thermoplastique thermorétractable (20), dans lesquelles ladite matière thermoplastique (20) peut comprendre un mélange :
- d'une dite première matière thermoplastique présentant une température de transition vitreuse Tg au moins égale à 40°C, et typiquement choisie parmi : PET, PVC, PS, PMMA, ou leur mélange, ou leurs copolymères,
- et d'une dite seconde matière thermoplastique présentant une température de transition vitreuse Tg inférieure à 50°C et typiquement inférieur à 10°C, et typiquement choisi parmi les polyoléfines tels que le PE, PP, PB, ou parmi les copolymères d'éthylène tels que l'EVA, l'EMA, l'EAA, ou parmi les copolymères d'éthylène et de propylène, ou parmi les élastomères thermoplastiques tels que le SIS, SEBS, ou leur mélange.
   Ledit mélange peut comprendre au moins 50% en volume de ladite première matière thermoplastique (200), et de 10 à 50 % en volume de ladite seconde matière thermoplastique (201).

Quel que soit le type de capsule, les capsules ou coiffes selon l'invention peuvent comprendre intérieurement une couche de revêtement thermoadhésif réactivable, typiquement une couche de "hot-melt", de manière à fixer tout ou partie desdites capsules ou coiffes sur lesdits goulots.
Ce moyen renforce encore le caractère inviolable des coiffes ou capsules selon l'invention, en rendant impossible une séparation de la capsule du goulot sans sa destruction au moins partielle et visible.

Un autre objet de l'invention est formé par des bâtons de capsules (1, 1b, 1c) ou de coiffes (1a) selon l'invention, lesdits bâtons étant formés par un empilement de capsules (1, 1b, 1c) ou de coiffes (1a) tronconiques, typiquement imprimées sur leur surface extérieure.

### EXEMPLES DE REALISATION

### A) Fabrication de portions de tubes (24)

La plupart des essais, en ce qui concerne la fabrication des portions de tubes (24), ont été réalisés avec le dispositif (3) représenté sur la figure 1b. D'autres essais ont été réalisés avec le dispositif de la figure 1c.

Dans ces essais, on a utilisé une extrudeuse (30) ayant un débit maximum de 50 kg/h en matière thermoplastique (20) et dont la vis présentait un rapport "longueur/diamètre" de 30.
On a utilisé une filière annulaire (31) ou tête d'extrudeuse ayant un diamètre D0 de 27 mm, le tube extrudé formé (21) ayant une épaisseur E0 de 0,7 mm et une température T allant typiquement de 190° à 240°C.

En sortie de filière annulaire (31), l'étape d'expansion radiale a été réalisée sur la distance axiale L0, distance qui va typiquement de 0,3 m à 0,6 m. Puis, l'étape d'étirage axial a été bloquée en utilisant de l'air pulsé (320) comme moyen de refroidissement (32) du tube étiré axialement, de manière à ce que le tube étiré axialement (22) soit à une température allant de 140° C à 160°C et présente un diamètre égal au diamètre D1 de ladite bague d'entrée (340, 340') dudit dispositif d'expansion radiale (34). Ce moyen de refroidissement (32) était mobile axialement, de manière à pouvoir ajuster le diamètre du tube étiré axialement (22) à celui, D1, de ladite bague d'entrée (340, 340').
Ce tube étiré (22) présentait à l'entrée du dispositif d'expansion radiale (34) une épaisseur E1 de 0,35 mm, ce qui correspond à un rapport S0/S1 de 3,86, qui traduit un taux d'étirage axial relativement élevé.

On a utilisé un dispositif d'expansion radiale (34) d'une longueur de 500 mm, mobile axialement, et écarté de ladite filière (21) d'une distance L allant typiquement de 0,5 m à 1 m, et doté d'une bague d'entrée (340) de diamètre D1 égal à 14 mm et d'une paroi intérieure (342) de diamètre intérieur D2 de 35 mm.
On a utilisé comme dispositif d'expansion radiale (34) celui représenté sur la figure 2 ou, de préférence, celui de la figure 11 avec sa zone d'expansion (341) s'étendant sur la distance L1 égale à 35 mm, de sorte que le rapport ΔD/L1 vaut 0,6 = (35-14)/35.
On a également fait des essais avec un dispositif (34) voisin ayant le profil intérieur représenté en pointillés sur la figure 2, et dans lequel la zone d'expansion (341) s'étend sur la distance L'1 > L1, la distance L'1 étant égale à 80 mm. Dans ce cas, le rapport ΔD/L1 vaut 0,26 = (35-14)/80.
Pour les essais, on a maintenu un vide de 0,35 bar grâce à la prise de vide (349).
On a refroidi à l'eau le dispositif (34), de manière à ce que le tube expansé radialement (23) sorte du dispositif à la température ambiante, typiquement vers 25°C, ce qui correspond à un abaissement de la température du tube d'environ 120 °C entre l'entrée et la sortie du dispositif d'expansion radiale (34).
Ce tube expansé radialement (23) présentait une épaisseur E2 de 0,14 mm.

On a utilisé comme moyen de traction axiale (35) un système à deux roulettes ou éventuellement un système à deux chenillettes qui tournent en sens inverse et qui en se rapprochant entraînent le tube expansé (23) sur une longueur axiale suffisante pour exercer sur la surface du tube expansé (23) une pression minime afin de ne pas marquer la surface du tube.
Ce système de traction axiale, tout comme le moyen de tronçonnage (36) qui le suit sont des dispositifs connus en eux-mêmes.

Déroulement typique d'un essai sur le dispositif de laboratoire utilisé :

| Elément | Débit /Vitesse | Diamètre D | Epaisseur E | Température |
|---|---|---|---|---|
| Extrudeuse | D = 4,4 kg/h | | | |
| Tube extrudé | | D0 = 27 mm | E0 = 0,70 mm | T0 = 200°C |
| Tube étiré | | D1 = 14 mm | E1 = 0,35 mm | T1 = 150°C |
| Tube expansé | | D2 = 35 mm | E2=0,14mm | T2 = 25°C |
| Traction | V = 5 m / min | | | |

On a également fait des essais sur une ligne industrielle avec un débit d'extrudeuse D et une vitesse de traction V 5 fois plus grandes.
On a découpé des portions de tubes "longues" (24, 241) de 60 mm de longueur, en vue de fabriquer des capsules de surbouchage à jupe thermorétractable (1c) selon le procédé illustré sur les figures 8a à 8e.

### B) Nature de la matière thermoplastique (20) utilisée dans les essais.

On a effectué un grand nombre d'essais. Les compositions sont, généralement des mélanges :
- à base d'une dite première matière thermoplastique PMT (200),
- à base d'une dite seconde matière thermoplastique SMT (201),
   Ces compositions - en poids % - peuvent comprendre en outre des charges minérales CM ou des charges ou adjuvants divers.
   Pour ces essais non limitatifs, on a utilisé les produits suivants :
- comme première matière plastique PMT :
   A = polystyrène cristal (Lacqrène 1811 de Atofina)
   B = copolyester (Embrace 22608 de Eastman)
- comme seconde matière plastique SMT :
   C = EVA (Escorene UL00218CC3 de Exxon Mobil Chemical)
   D = EVA (Evatane 1020 VN5 de Atofina)
   E = SEBS (Kraton G1652 de Shell)
   F = SIS (Kraton D1111 de Shell)
   G = PE (Engage 8400 Dupont Dow Elastomer)
- comme charge minérale :
   H = talc (10MOOS de Luzenac)
   I = Pigment blanc d'oxyde de titane

| No Essai | Nature & % PMT | Nature & % SMT | Nature & % CM |
|---|---|---|---|
| 1 | A = 18 % | D = 18% | |
| | B = 50 % | E = 14% | |
| 2 | A = 34 % | C = 16% | |
| | B = 34 % | E = 16% | |
| 3 | A = 28,8 % | C = 13,6 % | H = 12,1% |
| | B = 28,8 % | E = 13,6 % | I = 3,1% |
| 4 | A = 34,5 % | C = 15,5 % | |
| | B = 34,5 % | F = 15,5 % | |
| 5 | A = 29 % | C = 13% | H = 13% |
| | B = 29 % | F = 13% | I = 3% |
| 6 | A = 34 % | E = 16% | |
| | B = 34 % | G = 16% | |
| 7 | A = 28,8 % | E = 13,6% | H = 12,1 % |
| | B = 28,8 % | G = 13,6% | I = 3,1% |
| 8 | A = 34,5 % | D = 15,5 % | |
| | B = 34,5 % | F = 15,5 % | |
| 9 | A = 29 % | D = 13% | H = 13% |
| | B = 29 % | F = 13% | I = 3 % |
| 10 | A = 34,5 % | E = 31 % | |
| | B = 34,5 % | | |
| 11 | A = 29 % | E = 26,1 % | H = 13 % |
| | B = 29% | | I = 2,9 % |
| 12 | A = 17,8 % | D = 17,8% | |
| | B = 50% | E = 14,4% | |
| 13 | A = 17,2% | D = 17,2% | I = 3,5% |
| | B = 48,3 % | E = 13,8% | |
| 14 | B = 100 % | | |

### C) Fabrication de capsules (1) à partir de portions de tubes (24)

On a utilisé un dispositif (4) de mise en forme des portions de tube (24) qui comprend un carrousel (41) tournant autour de son axe (410) et doté de quatre mandrins de conformation (40) typiquement disposés à 90° les uns des autres, comme représenté sur les figures 6a, 6b et 7.
On a mis en oeuvre le procédé comme illustré schématiquement sur la figure 6a, selon une première modalité de l'invention. Dans ce procédé, particulièrement économique, la tête (11) de la capsule est formée à partir d'une portion de tube (24) dite longue (241) qui conduit à une ébauche de capsule rétractée (27) dont la partie supérieure (270) forme une réserve de matière pour former la tête (11) de la capsule, grâce à la compression d'une matrice (42).
A partir d'une portion de tube (24) de même dimension, on a fabriqué des capsules de diverses dimensions, en jouant simplement sur les dimensions du mandrin de conformation (40) et de la matrice (42) de formation de la tête (11).

On a aussi mis en oeuvre une première variante de cette première modalité illustrée sur la figure 7. Selon cette variante, on peut partir d'une portion de tube (24) dite courte (240), et dans ce cas, la tête (11) de la capsule est formée à partir d'une pastille (5) qui est alors typiquement en un matériau différent de celui de la jupe (12).
On a aussi mis en oeuvre une seconde variante de cette première modalité illustrée sur la figure 6b. Selon cette variante, on peut, chaque fois que l'on utilise une matrice de compression (42), incorporer à la tête de la capsule un autre élément susceptible d'être fixé à chaud et/ou par compression axiale.

Une fois formées et typiquement imprimées, les capsules de surbouchage (1c) ont pu être utilisées telles quelles.

On a également utilisé le procédé selon l'invention pour former également des coiffes (1a) selon les figures 5e et 5f, coiffes qui ont été dotées de moyens de première ouverture (14) comme illustré sur 1a figure 5f.

On a également utilisé le procédé selon l'invention pour former des capsules de bouchage à vis (1b).
Selon une première variante de procédé illustrée sur les figures 5a à 5d, on a formé une capsule de bouchage "composite" dans laquelle la tête (11) de la capsule (1b) est formée par la tête (50) de l'insert fileté (5').
Selon une seconde variante de procédé illustrée sur les figures 8a à 8e, l'insert (5') a été totalement masqué extérieurement par l'élément de capsule formé à partir de ladite portion (24).

### D) Résultats obtenus

Quel que soit le type de capsule (1b, 1c) ou de coiffe (1a), les résultats obtenus concernent :
1 - la facilité de fabrication et notamment l'aptitude à l'expansion,
2) - les propriétés de la capsule en termes de :
   a) capacité de rétraction : notamment lors du capsulage
   b) propriétés mécaniques : rigidité ou raideur de la capsule, facilité à déchirer la capsule, etc...
   c) toucher ou "main"
   d) aptitude à être coupée au couteau ou "coupabilité", notamment dans le cas des capsules de surbouchage (1c).

| ESSAI | Fabrication | Propriétés des capsules | | | |
|---|---|---|---|---|---|
| | | Rétraction | Propriétés mécaniques | Main ou Toucher | Coupabilité |
| 1 | Facile | Bonne | Bonnes | Bonne | Bonne |
| 2 | Expansion plus difficile | Bonne | Capsules plus raides | Toucher sec | Bonne |
| 3 | Expansion plus difficile | Bonne | Capsules plus raides | Toucher sec | Bonne |
| 4 | Facile | Rétraction plus faible | Capsules plus souples | Bon toucher | Bonne |
| | | | Faciles à déchirer | | |
| 5 | Facile | Rétraction plus faible | Capsules plus souples Faciles à déchirer | Bon toucher | Bonne |
| 6 | Facile | Rétraction plus faible | Capsules plus souples Faciles à déchirer | Bon toucher | Bonne |
| 7 | Facile | Rétraction plus faible | Capsules plus souples Faciles à déchirer | Bon toucher | Bonne |
| 8 | Facile | Rétraction plus faible | Capsules faciles à déchirer | Bon toucher | Bonne |
| 9 | Facile | Rétraction plus faible | Capsules faciles à déchirer | Bon toucher | Bonne |
| 10 | Expansion plus difficile | Bonne | Capsules un peu raides | Toucher un peu plus sec | Bonne |
| 11 | Expansion plus difficile | Bonne | Capsules un peu plus raides | Toucher un peu plus sec | Bonne |
| 12 | Facile | Bonne | Bonnes | Bon toucher | Bonne |
| 13 | Facile | Bonne | Bonnes | Bon toucher | Bonne |
| 14 | Facile | Bonne | Capsule plus rigide | Toucher plus "sec" | Plus difficile |

Les résultats relatifs des essais 2 à 14 sont à considérer par rapport à l'essai 1.

### AVANTAGES DE L'INVENTION

L'invention présente de grands avantages :
- d'une part, le procédé selon l'invention est un procédé économique. En effet, ce procédé est peu exigeant en matière d'investissement, et, en particulier, n'exige pas la présence d'un dispositif d'irradiation. Il permet en outre une grande productivité, et il nécessite à la fois une quantité de matière plastique par capsule relativement faible et l'emploi des matières plastiques courantes,
- d'autre part, le procédé selon l'invention permet de fabriquer tous les types de capsules, qu'il s'agisse de capsules de bouchage (1b), de capsules de surbouchage (1c), ou de coiffes (1a) pour le surbouchage de vins effervescents,
- en outre, le procédé selon l'invention permet d'obtenir des capsules décorées ou imprimées dont le décor ne subit pas de distorsion axiale durant la rétraction de la capsule sur le goulot,
- enfin, l'invention permet d'obtenir, à la demande, et comme illustré de manière non limitative par les exemples de réalisation, une grande variété de capsules, y compris des capsules voisines par leur toucher ou leur main des capsules métalliques à base d'étain, de sorte que le procédé, permettant de répondre potentiellement à tout type de demande, peut assurer la satisfaction de besoins personnalisés et individualisés.

### LISTE DES REPERES

| | |
|---|---|
| Capsule à jupe thermorétractable................................ | 1 |
| Coiffe à jupe thermorétractable.................................. | 1a |
| Capsule de bouchage à jupe thermorétractable ............... | 1b |
| Capsule de surbouchage à jupe thermorétractable ........... | 1c |
| Direction axiale de la capsule ou coiffe..................... | 10 |
| Tête..... | 11 |
| Jupe thermorétractable....................................... | 12 |
| Impression sur 11, 12, 24.................................. | 13 |
| Motif imprimé..... | 130 |
| Moyen d'ouverture facile..... | 14 |
| Ligne d'affaiblissement............................... | 140 |
| Languette d'ouverture..... | 141 |
| Bout de préhension de 141........................... | 142 |
| Précurseur de la capsule & coiffe 1, 1'..... | 2 |
| Matière thermoplastique de 21, 22, 23 ..... | 20 |
| Première matière thermoplastique...................... | 200 |
| Seconde matière plastique..... | 201 |
| Tube extrudé (S0, D0, E0, T0)..... | 21 |
| Tube étiré axialement (S1, D1, E1, T1)..... | 22 |
| Tube expansé radialement (S2, D2, E2, T2)................ | 23 |
| Portions de tube..... | 24 |
| Portion "courte"........................................ | 240 |
| Portion "longue"..... | 241 |
| Partie inférieure de 241................................ | 242 |
| Partie supérieure de 241............................... | 243 |
| Direction axiale de 21, 22, 23, 24 ou de 31, 32, 33, 34... | 25 |
| Ebauche de 1, 1a, 1b, 1c avec jupe thermorétractée...... | 26 |
| Ebauche avec jupe thermorétractée formée à partir de 241.. | 27 |
| Partie supérieure destinée à former la tête 11............. | 270 |
| Dispositif ou ligne de fabrication de portions 23............... | 3 |
| Extrudeuse..... | 30 |
| Filière ou tête d'extrudeuse..................................... | 31 |
| Moyen ou dispositif de refroidissement........................ | 32 |
| Projection d'air ou d'eau, typiquement annulaire... | 320 |
| Circulation d'eau..... | 321 |
| Bague de refroidissement..... | 322 |
| Bague de calibrage de diamètre D1..... | 33 |
| Dispositif d'expansion radiale.................................. | 34 |
| Bague d'entrée de diamètre D1..... | 340 |
| Orifices de mise sous vide..................... | 3401 |
| Zone d'expansion..... | 341 |
| Orifices de mise sous vide..................... | 3410 |
| Chambre annulaire avec contrôle de T et P.............. | 340' |
| Paroi intérieure de diamètre D2......................... | 342 |
| Paroi intérieure aspirante..... | 343 |
| Chambre d'expansion = 341+342...................... | 344 |
| Pièce métallique tubulaire intérieur...................... | 345 |
| Trous de mise sous vide de 343, 345..................... | 346 |
| Moyen de refroidissement auxiliaire..................... | 347 |
| Chambre extérieure de mise sous vide.................. | 348 |
| Prise de vide..... | 349 |
| Moyen de traction axiale.......................................... | 35 |
| Roulette ou Bande motrice..... | 350 |
| Moyen de tronçonnage de 23 en 24............................. | 36 |
| Accumulateur de 24..... | 37 |
| Dispositif ou ligne de mise en forme des portions 24..... | 4 |
| Mandrin de conformation de 24.............................. | 40 |
| Tête du mandrin..... | 400 |
| Carrousel à N mandrins ou positions angulaires (360°/N)... | 41 |
| Axe de rotation de 41..... | 410 |
| Matrice de formation ou fixation de la tête 11.............. | 42 |
| Pastille assemblée à 240 pour former 11................................ | 5 |
| Insert assemblé à 240 pour former 11..... | 5' |
| Tête..... | 50 |
| Jupe..... | 51 |
| Filetage de 51...................................................... | 510 |
| Moyen d'étanchéité de 50 ou 51................................. | 511 |
| Matériau en feuille..... | 52 |
| Pièce auxiliaire..... | 6 |
| Dispositif d'impression..... | 7 |
| Buse d'impression par pulvérisation ponctuelle................ | 70 |
| Moyen de commande numérique automatique - ordinateur.. | 71 |
| Moteur de mise en rotation de la capsule..... | 72 |
| Rampe axiale de buses 70 (tête d'impression)................. | 73 |
| Goulot de bouteille..... | 8 |
| Goulot de bouteille de champagne..... | 8' |
| Bouchon de liège................................................. | 80 |
| Bouchon à tête pour bouteille de champagne..... | 80' |
| Capsule 1, 1a, 1b, 1c rétractée sur 8..... | 9 |

## Revendications

1. Procédé de fabrication de capsules (1, 1b, 1c) ou coiffes (1a) à jupe thermorétractable (12) comprenant :
a) une étape d'extrusion dans laquelle on forme un tube extrudé (21) en matière thermoplastique (20) par extrusion à l'aide d'une filière (31) alimentée par une extrudeuse travaillant à la température T0 choisie en fonction de la température de ramollissement ou de fusion Tf de ladite matière thermoplastique (20), ladite filière présentant un diamètre D0, une largeur de fente ou épaisseur E0 et une section correspondante d'aire S0,
b) une étape d'expansion radiale dudit tube extrudé (20) pour former un tube expansé radialement (23) de diamètre D2, d'épaisseur E2, et de section correspondante d'aire S2, grâce à un dispositif d'expansion radiale,
c) une étape de tronçonnage dans laquelle ledit tube expansé (23) est tronçonné en portions de tube (24) de longueur appropriée, ledit tube expansé radialement tiré par un moyen de traction axiale (35),
d) une étape de mise en forme des portions de tube (24) dans laquelle chaque portion de tube (24) est placée sur un mandrin de conformation typiquement tronconique, et mise en forme par thermorétraction pour former une ébauche (26) de capsule thermorétractée, une tête (11) étant en outre typiquement assemblée à ladite ébauche (26) ou formée à partir de ladite ébauche (26), de manière à obtenir une capsule (1) ou une coiffe (1a) thermorétractable, dotée de ladite tête (11) et d'une jupe (12), et typiquement apte à recevoir une impression (13),
et **caractérisé en ce qu'**on incorpore, en sortie de filière (31) d'extrudeuse (30), entre ladite étape a) d'extrusion et ladite étape b) d'expansion, une étape d'étirage axial dudit tube extrudé (20), de manière à obtenir un tube étiré axialement (22) de diamètre D1 typiquement inférieur à D0 et à D2, d'épaisseur E1 typiquement inférieure à E0 et de section correspondante d'aire S1, tel que S0/S1 soit typiquement compris entre 2 et 10, lesdites étapes d'extrusion, d'étirage axial, d'expansion radiale et de tronçonnage étant réalisées en continu au défilé, de manière à obtenir des capsules (1, 1b, 1c) ou des coiffes (1a) qui soient à la fois économiques, faciles à thermorétracter, et de dimension axiale stable afin d'éviter toute distorsion axiale, notamment toute distorsion axiale de ladite impression (13).

2. Procédé selon la revendication 1 dans lequel ladite étape d'étirage axial est délimitée, en aval, par une zone de refroidissement dans laquelle un moyen de refroidissement (32) abaisse la température dudit tube étiré axialement (22) à une température T1, ladite température T1 étant choisie :
a) assez élevée pour être au moins égale à la température de transition vitreuse Tg ou à la température de fusion Tf de ladite matière thermoplastique, de manière à pouvoir mettre en oeuvre ladite étape d'expansion radiale subséquente,
b) assez basse pour interrompre ladite étape d'étirage axial et ainsi figer le diamètre dudit tube étiré axialement (22) à un diamètre D1 typiquement prédéterminé.

3. Procédé selon la revendication 2 dans lequel ladite température T1 est telle que ΔT, égal à T0-T1, aille de 30° à 150°C et typiquement de 45° à 100°C.

4. Procédé selon une quelconque des revendications 2 à 3 dans lequel ledit moyen de refroidissement comprend une projection extérieure d'air ou d'eau, typiquement annulaire (320).

5. Procédé selon une quelconque des revendications 2 à 4 dans lequel ledit moyen de refroidissement comprend une bague (322) refroidie à l'air ou à l'eau.

6. Procédé selon la revendication 5 dans lequel ladite bague comprend une partie de diamètre D1, de manière à former une bague de calibrage (33) de laquelle sort un tube de diamètre D1, typiquement étiré axialement et refroidi à la température T1.

7. Procédé selon une quelconque des revendications 2 à 6 dans lequel ledit moyen de refroidissement comprend une projection d'air ou d'eau à l'intérieur dudit tube étiré axialement, typiquement grâce à un conduit traversant ladite filière.

8. Procédé selon une quelconque des revendications 2 à 7 dans lequel ledit dispositif d'expansion radiale (34), alimenté en amont en tube étiré axialement (22) à ladite température T1, comprend une chambre d'expansion radiale (344) dotée d'une paroi intérieure (342) de diamètre D2 raccordée en amont à une zone d'expansion (341) destinée à faire passer ledit tube étiré axialement (22) du diamètre D1 au diamètre D2.

9. Procédé selon la revendication 8 dans lequel ledit dispositif d'expansion radiale (34) comprend en amont une bague d'entrée (340), typiquement de diamètre D1, de manière à avoir un tube étiré axialement (22) de diamètre D1 à profil régulier avant ladite expansion radiale.

10. Procédé selon la revendication 9 dans lequel ladite bague d'entrée (340) forme une chambre annulaire (340'), typiquement un anneau, de surface intérieure de diamètre intérieur D1, ladite surface intérieure comprenant une pluralité d'orifices (3401) de mise sous vide, ladite chambre annulaire (340') étant mise sous une pression Pa < P atmosphérique, de manière à plaquer ledit tube étiré axialement (22) contre ladite surface intérieure.

11. Procédé selon une quelconque des revendications 1 à 10 dans lequel ladite expansion radiale est obtenue soit en maintenant sous pression l'intérieur dudit tube (21, 22, 23), soit en maintenant sous dépression l'extérieur dudit tube (23).

12. Procédé selon la revendication 11 dans lequel ladite expansion radiale est obtenue en maintenant sous dépression ledit tube (23), ledit dispositif d'expansion radiale (34) comprenant une paroi intérieure aspirante (343) au moyen de trous (346) mis sous vide, de manière à ce que ledit tube de diamètre D1 se plaque contre ladite paroi intérieure de ladite zone d'expansion (341) et/ou contre la paroi intérieure (342) de diamètre intérieur D2, ladite température T1 étant choisie aussi basse que possible de manière à obtenir une thermorétraction élevée, mais cependant assez haute pour permettre ladite expansion radiale.

13. Procédé selon la revendication 12 dans lequel ladite paroi intérieure (342) de diamètre D2 est une pièce métallique tubulaire (345), typiquement une pièce en acier, aluminium, en alliage de cuivre, tel que le bronze ou un alliage de cupro-nickel, ladite pièce (345) pouvant être une pièce frittée apte à laisser passer l'air, ladite paroi intérieure (342) pouvant être traitée en surface, pour minimiser les forces de frottement entre ladite paroi intérieure (342) et ledit tube (23), ou pour donner audit tube (23) un aspect de surface particulier.

14. Procédé selon une quelconque des revendications 1 à 13 dans lequel ladite étape d'expansion radiale assure, dans ladite zone d'expansion (341), une augmentation de diamètre de D1 à D2 ou ΔD=D2-D1 d'au moins 10 mm, sur une distance L1 inférieure à 250 mm, et typiquement inférieure à 100 mm, de manière à avoir le rapport ΔD/L1 le plus élevé possible et typiquement supérieur à 1/25, et qu'ainsi ladite expansion radiale comprenne une composante d'expansion axiale faible ou négligeable.

15. Procédé selon une quelconque des revendications 1 à 14 dans lequel ladite étape d'expansion radiale comprend un refroidissement auxiliaire grâce à un moyen de refroidissement auxiliaire (347), de manière à avoir, en sortie dudit dispositif d'expansion radiale (34), un tube expansé radialement (23) à une température T2 typiquement comprise entre 10°C et 60°C, et typiquement à la température ambiante, ledit moyen de refroidissement auxiliaire (347) comprenant typiquement un refroidissement de ladite pièce métallique tubulaire (345) ou de ladite paroi intérieure (342) de diamètre D2, ladite température T2 devant être assez basse pour que le tube obtenu en sortie dudit dispositif d'expansion radiale (34) puisse être tiré par ledit moyen de traction axiale (35) sans risque de rupture ou d'allongement dudit tube expansé radialement (23) de diamètre D2.

16. Procédé selon une quelconque des revendications 1 à 15 dans lequel le diamètre D0 de ladite filière formant ledit tube extrudé (21) va typiquement de 20 mm à 50 mm, et sa largeur de fente ou épaisseur E0 va typiquement de 0,5 mm à 3 mm, de manière à avoir un débit de matière plastique de l'extrudeuse (30) allant typiquement de 10 kg à 100 kg de matière plastique à l'heure.

17. Procédé selon une quelconque des revendications 1 à 16 dans lequel ledit diamètre D1 dudit tube étiré axialement (22) va typiquement de 5 à 20 mm, et son épaisseur E1 va typiquement de 0,2 mm à 0,6 mm, avec un rapport D1/D0 au plus égal à 0,6, et avec un rapport E1/E0 au plus égal à 0,6.

18. Procédé selon une quelconque des revendications 1 à 17 dans lequel ledit diamètre D2 dudit tube expansé radialement (23) va typiquement de 20 mm à 50 mm et son épaisseur E2 va de 0,05 mm à 0,35 mm, et typiquement de 0,075 mm à 0,15 mm, avec un rapport D2/D1 au moins égal à 2 et avec un rapport E2/E1 au plus égal à 0,6.

19. Procédé selon une quelconque des revendications 2 à 18 dans lequel ledit dispositif d'expansion radiale (34) est placé à une distance L de ladite filière, ledit dispositif d'expansion radiale (34) étant typiquement mobile selon la dite direction axiale (25), ladite distance L étant choisie, notamment en fonction de ladite matière plastique, de manière à obtenir un niveau d'étirage axial suffisant et de manière à obtenir un refroidissement suffisant dudit tube étiré axialement (22).

20. Procédé selon la revendication 19 dans lequel ledit moyen de refroidissement (32) est placé à une distance L0 < L de ladite filière, ladite distance L0 étant choisie, notamment en fonction de ladite matière plastique, de manière à obtenir un niveau d'étirage axial suffisant, ledit moyen de refroidissement étant typiquement mobile selon ladite direction axiale (25), de manière à obtenir une régulation du diamètre D1 à l'entrée dudit dispositif d'expansion radiale (34) par un déplacement ΔL0 dudit moyen de refroidissement autour de ladite distance L0.

21. Procédé selon la revendication 20 dans lequel ledit dispositif d'expansion radiale (34) comprend ladite chambre annulaire (340') mise sous vide à ladite pression Pa, et dans lequel ledit déplacement ΔL0 est asservi notamment à ladite pression Pa, toute augmentation de pression Pa impliquant pour ledit tube étiré axialement un écart négatif ΔD1 de diamètre par rapport au diamètre D1, ledit écart négatif ΔD1 pouvant être corrigé par un déplacement ΔL0 négatif de manière à augmenter de ΔD1 le diamètre dudit tube étiré axialement.

22. Procédé selon une quelconque des revendications 20 à 21 dans lequel ledit déplacement ΔL0 est asservi notamment à la force de traction axiale Ft exercée par ledit moyen de traction, toute augmentation ou écart positif ΔFt de ladite force Ft impliquant typiquement un écart positif ΔD1 de diamètre par rapport au diamètre D1 dudit tube, ledit tube étiré axialement (22) présentant alors un diamètre plus grand que le diamètre d'entrée dans ledit dispositif d'expansion radiale (34), ledit écart positif ΔFt pouvant être corrigé par un déplacement ΔL0 positif de manière à diminuer de ΔD1 le diamètre dudit tube étiré axialement.

23. Procédé selon une quelconque des revendications 1 à 22 dans lequel ladite matière thermoplastique (20) comprend ou est constituée par au moins une dite première matière thermoplastique (200) présentant une température de transition vitreuse Tg au moins égale à 40°C, et typiquement choisie parmi : PET, PVC, PS, PMMA, ou leur mélange, ou copolymères de PET, PVC, PS, PMMA.

24. Procédé selon une quelconque des revendications 1 à 23 dans lequel ladite matière thermoplastique (20) comprend ou est constituée par au moins une dite seconde matière thermoplastique (201) présentant une température de transition vitreuse Tg inférieure à 50°C et typiquement inférieure à 10°C, et typiquement choisi parmi les polyoléfines tels que le PE, PP, PB, ou parmi les copolymères d'éthylène tels que l'EVA, l'EMA, l'EAA, les copolymères d'éthylène et de propylène, ou parmi les élastomères thermoplastiques tels que le SIS, SEBS, ou leur mélange.

25. Procédé selon les revendications 23 à 24 dans lequel ladite matière thermoplastique (20) comprend un mélange de ladite première matière thermoplastique (200) et de ladite seconde matière thermoplastique (201), ledit mélange comprenant au moins 50% en volume de ladite première matière thermoplastique (200), et de 10 à 50 % en volume de ladite seconde matière thermoplastique (201), de manière à obtenir des capsules (1, 1b, 1c) ou des coiffes (1a) présentant toute une palette de textures et de flexibilité en fonction de la teneur relative en lesdites première (200) et seconde (201) matières thermoplastiques.

26. Procédé selon les revendications 23 à 24 dans lequel ladite matière thermoplastique (20) forme ou comprend un matériau multicouche, ledit matériau multicouche comprenant une dite première couche constituée de ladite première matière thermoplastique et une seconde couche constituée de ladite seconde matière thermoplastique, ledit matériau multicouche pouvant inclure une couche intérieure adhésive.

27. Procédé selon une quelconque des revendications 1 à 26 dans lequel tout ou partie de ladite matière thermoplastique (20) contient une charge micronisée typiquement choisie parmi le talc, le carbonate de calcium, le sulfate de baryum, l'oxyde de titane, les pigments organiques ou minéraux, les argiles nanoparticulaires, de manière à colorer ladite matière thermoplastique (20).

28. Procédé selon une quelconque des revendications 1 à 27 dans lequel, à l'étape c) de tronçonnage, ladite portion de tube (24) est une portion de tube dite courte (240), ladite longueur appropriée de ladite portion de tube (24) étant choisie typiquement voisine de la hauteur H de ladite capsule, dans lequel, à l'étape d) de mise en forme, on approvisionne une pastille (5), plane ou à rebord incurvé, destinée à former la tête (11) de ladite capsule (1, 1b, 1c) ou de ladite coiffe (1a), et dans lequel ladite pastille (5) est assemblée à ladite ébauche de jupe (26), typiquement par thermoscellage à l'aide d'une matrice (42) coopérant avec ledit mandrin (40), la coopération de ladite matrice (42) avec ledit mandrin (40) mettant éventuellement en forme ou en relief ladite pastille (5).

29. Procédé selon la revendication 28 dans lequel ladite pastille (5) est obtenue par découpe d'un matériau en feuille (52), éventuellement transparent, en un matériau choisi parmi les matières plastiques, les bandes ou feuilles métalliques, le papier ou le carton ou des assemblages multicouches de ces matériaux, ladite pastille pouvant comprendre tous types de systèmes permettant notamment d'identifier la capsule, de suivre et d'assurer la traçabilité des produits conditionnés, de former un moyen anti-fraude et anti-vol.

30. Procédé selon une quelconque des revendications 28 à 29 dans lequel ladite pastille (5) est une pastille fiscalisée.

31. Procédé selon une quelconque des revendications 28 à 30 dans lequel ladite pastille (5) est remplacée par un insert (5') comprenant une tête (50) et éventuellement une jupe (51), ledit insert (5') étant placé à l'extrémité supérieure dudit mandrin de conformation (40), typiquement avant thermorétraction de ladite portion de tube (24), de manière à assembler ledit insert (5') à ladite ébauche de jupe thermorétractée (26), éventuellement à l'aide d'une couche adhésive ou thermoscellante.

32. Procédé selon la revendication 31 dans lequel ledit insert (5') comprend un filetage (510) et présente un moyen d'étanchéité (511), de manière à former une capsule de bouchage (1b).

33. Procédé selon une quelconque des revendications 1 à 27 dans lequel, à l'étape c) de tronçonnage du procédé, ladite portion de tube est une portion dite longue (241), ladite longueur appropriée étant prise supérieure à la hauteur de ladite capsule, ladite portion de tube (241) comprenant une partie inférieure (242) destinée à former la jupe (12) de ladite capsule (1, 1b, 1c) ou de ladite coiffe (1a), et une partie supérieure (243) destinée à former la tête (11) de ladite capsule (1, 1b, 1c) ou de ladite coiffe (1a), ladite tête (11) étant formée par compression ou moulage de ladite partie supérieure (243) entre une matrice (42) et une tête (400) dudit mandrin (40).

34. Procédé selon la revendication 33 dans lequel une pièce auxiliaire (6) formant typiquement un motif, un décor ou un moyen de fiscalisation, est introduite dans ladite matrice (42) avant ladite compression, de manière à former simultanément ladite tête (1) et à assembler à ladite tête (11) ladite pièce auxiliaire (6).

35. Procédé selon une quelconque des revendications 1 à 34 dans lequel ladite impression (13) est formée sur ladite portion de tube (24), et/ou sur ladite jupe (12), et/ou sur ladite tête (11), et/ou sur ladite ébauche de jupe thermorétractée (26), soit avant soit après avoir assemblé ou formé la tête (11) de ladite capsule (1, 1b, 1c) ou de ladite coiffe (1a).

36. Procédé selon la revendication 35 dans lequel, pour former ladite impression (13), on utilise des encres réticulables sous rayonnement, typiquement des encres UV, de manière à ce que ladite impression (13) soit typiquement formée à une température inférieure à la température à laquelle la capsule se thermorétracte.

37. Procédé selon une quelconque des revendications 35 à 36 dans lequel ladite impression (13) est formée en utilisant un dispositif d'impression par jet d'encre (7) ou par transfert comprenant une pluralité de N buses d'impression (70) en parallèle selon ladite direction axiale ou hauteur H, ladite pluralité comprenant une densité de buses (70) d'au moins 1 buse par mm, ledit dispositif étant commandé typiquement par un ordinateur (71), doté de moyens de stockage numérique des motifs imprimés (130) à reproduire sur ladite capsule (1, 1b, 1c) ou sur ladite coiffe (1a), de manière à pouvoir imprimer simultanément plusieurs motifs (130) différents, à pouvoir changer sur le champ de motif imprimé (130), et ainsi à imprimer des séries de capsules (1, 1b, 1c) ou de coiffes (1a) éventuellement très courtes.

38. Procédé selon une quelconque des revendications 1 à 37 dans lequel tout ou partie de ladite matière thermoplastique (20, 200, 201) comprend une matière thermoplastique colorée dans la masse.

39. Procédé selon une quelconque des revendications 26 à 38 dans lequel ledit matériau multicouche comprend une couche extérieure en une matière plastique, typiquement polaire ou à énergie de surface élevée, de manière à être apte à être imprimée en conduisant à un décor adhérent à ladite couche extérieure.

40. Procédé selon une quelconque des revendications 1 à 39 dans lequel ladite jupe (12) comprend un moyen d'ouverture facile (14) comprenant typiquement deux lignes d'affaiblissement (140) espacées pour former une languette d'ouverture (141) dotée d'un bout de préhension manuelle (142).

41. Procédé selon une quelconque des revendications 1 à 40 dans lequel ledit moyen de traction axiale (35) comprend deux roulettes motrices (350) ou deux chenillettes.

## Claims

1. Method for the production of capsules (1, 1b, 1c) or caps (1a) with a heat shrinkable skirt (12) comprising:
a) an extrusion step in which an extruded tube (21) is formed made of a thermoplastic material (20) by extrusion using a die (31) suppli ed by an extruder operating at temperature T0 chosen as a function of the softening temperature or the melting temperature Tf of the said thermoplastic material (20), the said die having a diameter D0, a slit width or thickness E0 and a corresponding section with area S0,
b) a radial expansion step of the said extruded tube (20) to form a radially expanded tube (23) with diameter D2, thickness E2 and corresponding section with area S2, due to a radial expansion device,
c) a chopping step in which the said expanded tube (23) is chopped into portions (24) of tube with an appropriate length, the said radially expanded tube pulled by an axial tension means (35),
d) a step to form tube portions (24) in which each portion (24) of tube is placed on a typically tape red conformation mandrel and is formed by heat shrinkage to form a heat -shrunk capsule blank (26), one head (11) also typically being assembled to the said blank (26) or formed from the said blank (26), so as to obtain a capsule (1) or a heat shrinkable cap (1a) provided with said head (11) and a skirt (12), and typically capable of receiving printing (13), and **characterised in that** a drawing step is included in which the said extruded tube (20) is drawn in the axial direction, at the exit from the die (31) of the extruder (30) between the said extrusion step a) and the said expansion step b), so as to obtain an axially drawn tube (22) with diameter D1 typically less than D0 and D2, with thickness E1 typically less than E0 and with a corresponding section wi th area S1, such that SO/S1 typically ranges between 2 and 10, the said extrusion, axial drawing, radial expansion and chopping steps being carried out continuously while moving so as to obtain capsules (1, 1b, 1c) or caps (1a) that are both economic, easily heat shrinkable and with a stable axial dimension thereby avoiding any axial distortion, and particularly any axial distortion of the said printout (13).

2. Method according to claim 1, in which the said axial drawing step is delimited on the output side by a cooling zone in which a cooling means (32) lowers the temperature of the said axially drawn tube (22) to a temperature T1, the said temperature T1 being chosen:
a) to be fairly high so that it is equal to at least the vitreous transition temperature Tg or the melting temperature Tf of the said thermoplastic material, so as to be able to use the said subsequent radial expansion step,
b) to be fairly low to interrupt the said axial drawing step and thus to fix the diameter of the said axially drawn tub e (22) to a typically predetermined diameter D1.

3. Method according to claim 2, in which the said temperature T1 is such that ΔT, equal to T0 - T1, varies from 30° to 150°C and typically from 45° to 100°C.

4. Method according to either claim 2 or 3, in which the said cooling means includes an external air or water projection, typically an annular projection (320).

5. Method according to any one of claims 2 to 4, in which the said cooling means comprises a ring (322) cooled with air or water.

6. Method according to claim 5, in which the said ring includes a part with diameter D1 so as to form a calibration ring (33) from which a tube with diameter D1 projects, typically axially drawn and cooled to temperature T1.

7. Method according to any one of claims 2 to 6, in which the said cooling means includes air or water projection inside the said axially drawn tube, typically through a pipe passing through the said die.

8. Method according to any one of claims 2 to 7, in which the said radial expansion device (34) supplied on the input side with the axially drawn tube (22) at the said temperature T1, includes a radial expansion chamber (344) provided with an inner wall (342) with diameter D2 connected on the input side to an expansion area (341) designed to change the diameter of the said axially drawn tube (22) from D1 to D2.

9. Method according to claim 8, in which the said radial expansion device (34) includes an entry ring (340) on the input side, typically with diameter D1, so as to have an axially drawn tube (2 2) with diameter D1 and a regular profile before the said radial expansion.

10. Method according to claim 9, in which the said entry ring (340) forms an annular chamber (340') typically a ring, with an inside area with inside diameter D1, the said inner su rface comprising a plurality of vacuum creation orifices (3401), the said annular chamber being put under a pressure Pa < P atmospheric, so as to force the said axially drawn tube (22) into contact with the said inner surface.

11. Method according to any one of claims 1 to 10, in which the said radial expansion is obtained either by keeping the inside of the said tube (21, 22, 23) under pressure, or by keeping the outside of the said tube (23) under negative pressure.

12. Method according to claim 11, in wh ich the said radial expansion is obtained by keeping the said tube (23) under a vacuum, the said radial expansion device (34) including a suction inside wall (343) using vacuum creation holes (346) such that the said tube with diameter D1 is forced into co ntact with the said inside wall of the said expansion area (341) and /or into contact with the inside wall (342), with inside diameter D2, the said temperature T1 being chosen to be as low as possible so as to obtain high heat shrinkage, but high enough to enable the said radial expansion.

13. Method according to claim 12, in which the said inside wall (342) with diameter D2 is a tubular metallic part (345), typically a steel, aluminium, copper alloy part, for example such as a bronze or cupro-nickel alloy, the said part (345) possibly being a sintered part capable of allowing air to pass through, the said inside wall (342) possibly being surface treated, either to minimise friction forces between the said inside wal (342) and the said tube (23), or to give a particular surface appearance to the said tube (23).

14. Method according to any one of claims 1 to 13, in which the said radial expansion step in the said expansion area (341) results in an increase of the diameter from D1 to D2 or ΔD = D2 - D1 equal to at least 10 mm, over a distance L1 less than 250 mm and typically less than 100 mm, such that the ΔD/L1 ratio is as high as possible and typically more than 1/25, and thus the said radial expansion includes a low or negligible axial expansion component.

15. Method according to any one of claims 1 to 14, in which the said radial expansion step includes auxiliary cooling due to an auxiliary cooling means (347) so as to have a radially expanded tube (23) at the exit from the said radial expansion device (34), at a temperature T2 typically between 10°C and 60°C and typically at ambient temperature, the said auxiliary cooling means (347) typically including cooling of the said tubular metallic part (345) or the said inside wall (342) with diameter D2, the said temperature T2 having to be fairly low so that the tube obtained at the exit from the said radial expansion device (34) can be drawn by the said axial tension means (35) without any risk of failure or elongation of the said radially expanded tube (23) with diameter D2.

16. Method according to any one of claims 1 to 15, in which the diameter D0 of the said die forming the said extruded tube (21) typically varies from 20 mm to 50 mm, and its slit width or thickness E0 typically varies from 0.5 mm to 3 mm, so a s to have a flow of plastic material from the extruder (30) typically varying from 10 kg to 100 kg of plastic material/hour.

17. Method according to any one of claims 1 to 16, in which the said diameter D1 of the said axially drawn tube (22) typically vari es from 5 to 20 mm, and its thickness E1 typically varies from 0.2 mm to 0.6 mm, with a D1/D0 ratio equal to not more than 0.6, and with an E1/E0 ratio equal to not more than 0.6.

18. Method according to any one of claims 1 to 17, in which the said diameter D2 of the said radially expanded tube (23) typically varies from 20 mm to 50 mm and its thickness E2 varies from 0.05 mm to 0.35 mm, and typically from 0.075 mm to 0.15 mm, with a D2/D1 ratio equal to not more than 2 and with an E2/E1 ratio equal to not more than 0.6.

19. Method according to any one of claims 2 to 18, in which the said radial expansion device (34) is placed at a distance L from the said die, the said radial expansion device (34) typically being free to move along the said axial direction (25), the said distance L being chosen particularly as a function of the said plastic material, so as to obtain a sufficient degree of axial drawing and so as to obtain sufficient cooling of the said axially drawn tube (22).

20. Method according to claim 1 9, in which the said cooling means (32) is placed at a distance L0 < L from the said die, the said distance L0 being chosen particularly as a function of the said plastic material so as to obtain sufficient axial drawing, the said cooling means typically being free to move along the said axial direction (25) so as to regulate the diameter D1 at the input to the said radial expansion device (34) by a displacement ΔL0 of the said cooling means around the said distance L0.

21. Method according to claim 20, in which the said radial expansion device (34) includes the said annular chamber (340') under a vacuum at the said pressure Pa, and in which the said displacement ΔL0 is slaved particularly to the said pressure Pa, any increase in pressure Pa introducing a ne gative difference ΔD1 in diameter with respect to the said diameter D1 for the said axially drawn tube, the said negative difference ΔD1 being corrected by a negative displacement ΔL0 so as to increase the diameter of the said axially drawn tube by ΔD1.

22. Method according to either claim 20 or 21, in which the said displacement ΔL0 is slaved in particular to the axial tension force Ft applied by the said tension means, any increase or positive difference ΔFt in the said force Ft typically implying a posit ive difference ΔD1 in the diameter of the said tube, the said axially drawn tube (22) then having a larger diameter than the entry diameter into the said radial expansion device (34), the said positive difference ΔFt possibly being corrected by a positive displacement ΔL0 so as to reduce the diameter of the said axially drawn tube by ΔD1.

23. Method according to any one of claims 1 to 22, in which the said thermoplastic material (20) is composed of or comprises at least one said first thermoplastic material (200) with a vitreous transition temperature Tg equal to at least 40°C, and typically chosen from among PET, PVC, PS, PMMA, or a mix of these materials, or copolymers of PET, PVC, PS, PMMA.

24. Method according to any one of claims 1 to 23, in which the said thermoplastic material (20) includes or is composed of at least one second thermoplastic material (201) with a vitreous transition temperature Tg less than 50°C and typically less than 10°C, and typically chosen from among polyolefins such as PE, PP, PB or from among ethylene copolymers such as EVA, EMA, EAA, ethylene and propylene copolymers or from among thermoplastic elastomers such as SIS, SEBS or a mix of these elastomers.

25. Method according to either claim 23 or 24, in which the said thermoplastic material (20) includes a mix of the said first thermoplastic material (200) and the said second thermoplastic material (201), the said mix including at least 50% by volume of the said first thermoplastic material (200), and 10 to 50% by volume of the said second thermoplastic material (201), so as to obtain capsules (1, 1b, 1c) or caps (1a) with a range of textures and flexibility depending on the relative content of the said first (200) and second (201) thermoplastic materials.

26. Method according to either claim 23 or 34, in which the said thermoplastic material (20) forms or comprises a multi-layer material, the said multi -layer material comprising a said first layer composed of the said first thermoplastic material and a second layer composed of the said second thermoplastic material, the said multi -layer material possibly including an internal adhesive layer.

27. Method according to any one of claims 1 to 26, in which all or some of the said thermoplastic material (20) contains a micronised filler typically chosen from among talc, calcium carbonate, barium sulphate, titanium oxide, organic or mineral pigments, nanoparticle clays, so as to colour the said thermoplastic material (20).

28. Method according to any one of claims 1 to 27 in which the said tube portion (24) in the said chopping step c) is a so -called "short" tube portion (240), the said appropriate length of the said tube portion (24) typically being chosen to be approximately the height H of the said capsule, in this case, in the forming step d), a sticker (5) with a flat or curved edge is supplied that will form the head (11) of the said capsule (1, 1b, 1c) or the said cap (1a), and in which the said sticker (5) is assembled to the said skirt blank (26), typically by heat sealing using a cavity (42) cooperating with the said mandrel (40), cooperation of the said cavity (42) with the said mandrel (40) possibly shaping the said sticker (5) or putting it in relief.

29. Method according to claim 28, in which the said sticker (5) is obtained by cu tting a sheet material (52), possibly transparent, made of a material chosen from among plastics, metal strips or sheets, paper or cardboard or multi -layer assemblies of these materials, the said sticker possibly comprising any type of system particularly to identify the capsule, to monitor and assure traceability of packaged products, and to form an anti-fraud and anti-theft means.

30. Method according to either claim 28 or 29, in which the said sticker (5) is an excise sticker.

31. Method according to any one of claims 28 to 30, in which the said sticker (5) is replaced by an insert (5') comprising a head (50) and possibly a skirt (51), the said insert (5') being placed at the upper end of the said conformation mandrel (40), typically before heat shrinking of the said tube portion (24), so as to assemble the said insert (5') to the said heat shrunk skirt blank (26), possibly using an adhesive or heat-sealing layer.

32. Method according to claim 31, in which the said insert (5') comprises a thread (510) and is provided with a sealing means (511) so as to form a closing capsule (1b).

33. Method according to any one of claims 1 to 27 in which the said tube portion in the said chopping step c) is a so -called "long" tube portion (241), the said appropriate length being chosen to be greater than the height of the said capsule, the said tube portion (241) comprising a lower part (242) designed to form the skirt (12) of the said capsule (1, 1b, 1c) or the said cap (1a), and an upper part (243) designed to form the head (11) of the said capsule (1, 1b, 1c) or the said cap (1a), the said head (11) being formed by compression or moulding of the said upper part (243) between a die (42) and a head (400) of the said mandrel (40).

34. Method according to claim 33 in which an auxiliary part (6) typically forming a pattern, a décor or an excise means, is introduced into the said cavity (42) before the said compression, so as to simultaneously form the said head (1) and to assemble the said auxiliary part (6) to the said head (11).

35. Method according to any one of claims 1 to 34, in which the said printing (13) is formed on the said tube portion (24), and /or on the said skirt (12), and/or on the said head (11), and /or on the said heat - shrunk skirt blank (26), either before or after assembling or forming the head (11) of the said capsule (1, 1b, 1c) or the said cap (1a).

36. Method according to claim 35, in which inks that can be cross-linked by radiation, and typically UV inks, are used for the said printing (13) such that the said printing (13) is typically formed at a temperature below the temperature at which the capsule shrinks.

37. Method according to either claim 35 or 36, in which the said printing (13) is formed by using an ink jet print device (7) or by a transfer compri sing a plurality of N printing nozzles (70) in parallel along the said axial direction or height H, the said plurality including a density of nozzles (70) equal to at least 1 nozzle per mm, the said device typically being controlled by a computer (71) prov ided with digital storage means for the printed patterns (130) to be reproduced on the said capsule (1, 1b, 1c) or on the said cap (1a) so as to be able to print several different patterns (130) simultaneously, to be able to change the printed pattern (130) immediately when necessary and thus to print possibly very short series of capsules (1, 1b, 1c) or caps (1a).

38. Method according to any one of claims 1 to 37, in which all or some of the said thermoplastic material (20, 200, 201) is coloured in-depth.

39. Method according to any one of claims 26 to 38 in which the said multi -layer material includes an outside layer made of a plastic material, typically polar or with a high surface energy so that it can be printed and that leads to a décor bonding to the said outside layer.

40. Method according to any one of claims 1 to 39, in which the said skirt (12) comprises an easy opening means (14) typically including two lines of weakness (140) at a spacing from each other to form an opening tab (141) provided with a manual gripping end (142).

41. Method according to any one of claims 1 to 40, in which the said axial tension means (35) includes two driving rollers (350) or two belt type pullers.

## Patentansprüche

1. Verfahren zur Herstellung von Kapseln (1, 1b, 1c) bzw. Kappen (1a) mit aufschrumpfbarer Schürze (12), umfassend:
a) einen Extrusionsschritt, bei dem ein extrudierter Schlauch (21) aus thermoplastischem Kunststoff (20) durch Extrusion mithilfe einer von einem Extruder gespeisten Extrusionsdüse (31) gebildet wird, welcher Extruder bei einer je nach der Erweichungs- oder Schmelztemperatur Tf des thermoplastischen Kunststoffs (20) gewählten Temperatur T0 arbeitet, wobei die Extrusionsdüse einen Durchmesser D0, eine Schlitzbreite oder Dicke E0 und einen entsprechenden Flächenquerschnitt S0 aufweist,
b) einen Schritt zur radialen Aufweitung des extrudierten Schlauchs (21), um mithilfe einer Vorrichtung zur radialen Aufweitung einen radial aufgeweiteten Schlauch (23) mit einem Durchmesser D2, einer Dicke E2 und einem entsprechenden Flächenquerschnitt S2 zu bilden,
c) einen Schneidschritt, bei dem der aufgeweitete Schlauch (23) in Schlauchabschnitte (24) geeigneter Länge geschnitten wird, wobei der radial aufgeweitete Schlauch mit einem Mittel zum axialen Recken (35) gereckt wird,
d) einen Schritt zur Formgebung der Schlauchabschnitte (24), bei dem jeder Schlauchabschnitt (24) auf einen typischerweise kegelstumpfförmig ausgebildeten Dorn gesetzt wird, und Formgebung durch Schrumpfen, um einen Vorformling (26) für die Schrumpfkapsel zu bilden, wobei außerdem ein Kopf (11) typischerweise an den Vorformling (26) angefügt oder aus dem Vorformling (26) gebildet wird, um eine aufschrumpfbare Kapsel (1) bzw. Kappe (1a) zu erhalten, die mit dem Kopf (11) und einer Schürze (12) versehen ist und typischerweise einen Aufdruck (13) erhalten kann,
**und dadurch gekennzeichnet, dass** beim Austritt aus der Düse (31) des Extruders (30) zwischen Extrusionsschritt a) und Aufweitungsschritt b) ein Schritt zum axialen Strecken des extrudierten Schlauchs (21) eingefügt wird, um einen axial gestreckten Schlauch (22) mit einem Durchmesser D1 typischerweise kleiner als D0 und D2, einer Dicke E1 typischerweise kleiner als E0 und einem entsprechenden Flächenquerschnitt S1 zu erhalten, so dass S0/S1 typischerweise zwischen 2 und 10 beträgt, wobei die Schritte Extrudieren, axiales Strecken, radiales Erweitern und Schneiden kontinuierlich in der Bewegung erfolgen, um Kapseln (1, 1b, 1c) bzw. Kappen (1a) zu erhalten, die sowohl kostengünstig und leicht aufschrumpfbar als auch axial maßhaltig sind, um jegliche Axialverformung, insbesondere jegliche Axialverformung des Aufdrucks (13) zu vermeiden.

2. Verfahren nach Anspruch 1, bei dem der Schritt zum axialen Strecken abwärts durch eine Kühlzone begrenzt ist, in der eine Kühleinrichtung (32) die Temperatur des axial gestreckten Schlauchs (22) auf eine Temperatur T1 herabsetzt, wobei die Temperatur T1
a) hoch genug gewählt wird, damit sie mindestens der Glasübergangstemperatur Tg oder der Schmelztemperatur Tf des thermoplastischen Kunststoffs entspricht, um den nachfolgenden Schritt zum radialen Aufweiten durchführen zu können,
b) tief genug gewählt wird, um den Schritt zum radialen Aufweiten zu unterbrechen und damit den Durchmesser des axial gestreckten Schlauchs (22) auf einen typischerweise vorbestimmten Durchmesser D1 festzulegen.

3. Verfahren nach Anspruch 2, bei dem die Temperatur T1 so gewählt wird, dass ΔT, gleich T0-T1, 30 bis 150 °C und typischerweise von 45 bis 100 °C beträgt.

4. Verfahren nach irgendeinem der Ansprüche 2 bis 3, bei dem die Kühleinrichtung aus einer typischerweise ringförmigen, äußeren Luft- oder Wasserbespritzung (320) besteht.

5. Verfahren nach irgendeinem der Ansprüche 2 bis 4, bei dem die Kühleinrichtung aus einem luft- oder wassergekühlten Ring (322) besteht.

6. Verfahren nach Anspruch 5, bei dem der Ring einen Teil mit einem Durchmesser D1 aufweist, so dass ein Kalibrierring (33) gebildet wird, aus dem ein typischerweise axial gestreckter, mit der Temperatur T1 gekühlter Schlauch mit dem Durchmesser D1 austritt.

7. Verfahren nach irgendeinem der Ansprüche 2 bis 6, bei dem die Kühleinrichtung aus einer Luft- oder Wasserbespritzung im Innern des axial gestreckten Schlauchs besteht, typischerweise mithilfe einer die Düse durchquerenden Leitung.

8. Verfahren nach irgendeinem der Ansprüche 2 bis 7, bei dem die Vorrichtung zur radialen Aufweitung (34), die oberhalb mit einem bei der Temperatur T1 axial gestreckten Schlauch (22) gespeist wird, eine Kammer zur radialen Aufweitung (344) mit einer Innenwand (342) mit dem Durchmesser D2 aufweist, die oberhalb mit einer Aufweitungszone (341) verbunden ist, welche dazu dient, den axial gestreckten Schlauch (22) von dem Durchmesser D1 auf den Durchmesser D2 zu bringen.

9. Verfahren nach Anspruch 8, bei dem die Vorrichtung zur radialen Aufweitung (34) oberhalb einen Eingangsring (340) typischerweise mit dem Durchmesser D1 aufweist, um einen axial gestreckten Schlauch (22) mit dem Durchmesser D1 mit regelmäßigem Profil vor der radialen Aufweitung zu erhalten.

10. Verfahren nach Anspruch 9, bei dem der Eingangsring (340) eine Ringkammer (340') bildet, typischerweise einen Ring, mit einer Innenfläche mit dem Innendurchmesser D1, wobei die Innenfläche eine Vielzahl von Öffnungen (3401) zur Beaufschlagung mit Vakuum aufweist, wobei die Ringkammer (340') mit einem Druck Pa < Atmosphärendruck beaufschlagt wird, um den axial gestreckten Schlauch (22) an die Innenfläche zu pressen.

11. Verfahren nach irgendeinem der Ansprüche 1 bis 10, bei dem die radiale Aufweitung **dadurch** erzielt wird, dass der Schlauch (21, 22, 23) entweder innen unter Druck oder der Schlauch (23) außen unter Unterdruck gehalten wird.

12. Verfahren nach Anspruch 11, bei dem die radiale Aufweitung **dadurch** erzielt wird, dass der Schlauch (23) unter Unterdruck gehalten wird, wobei die Vorrichtung zur radialen Aufweitung (34) eine saugende Innenwand (343) mittels mit Vakuum beaufschlagten Löchern (346) aufweist, so dass der Schlauch mit dem Durchmesser D1 an die Innenwand der Aufweitungszone (341) und/oder an die Innenwand (342) mit dem Innendurchmesser D2 gepresst wird, wobei die Temperatur T1 so niedrig wie möglich gewählt wird, um eine hohe Wärmeschrumpfung zu erzielen, aber dennoch ausreichend hoch gewählt wird, um die radiale Aufweitung zu gestatten.

13. Verfahren nach Anspruch 12, bei dem die Innenwand (342) mit dem Durchmesser D2 ein schlauchförmiges Metallteil (345) ist, typischerweise ein Teil aus Stahl, Aluminium, aus Kupferlegierung wie Bronze oder einer Kupfer-Nickel-Legierung, wobei das Teil (345) ein Luft durchlassendes Sinterteil sein kann, wobei die Innenwand (342) oberflächenbehandelt werden kann, um die Reibungskräfte zwischen Innenwand (342) und Schlauch (23) zu minimieren oder um dem Schlauch (23) ein besonderes Oberflächenbild zu geben.

14. Verfahren nach irgendeinem der Ansprüche 1 bis 13, bei dem der Schritt zum radialen Aufweiten in der Aufweitungszone (341) eine Durchmesservergrößerung von D1 auf D2 oder ΔD=D2-D1 von mindestens 10 mm über eine Entfernung L1 von weniger als 250 mm und typischerweise weniger als 100 mm gewährleistet, so dass das ΔD/L1-Verhältnis so groß wie möglich ist, typischerweise größer als 1/25, und die radiale Aufweitung eine schwache oder vernachlässigbare Radialaufweitungskomponente aufweist.

15. Verfahren nach irgendeinem der Ansprüche 1 bis 14, bei dem der Schritt zum radialen Aufweiten eine zusätzliche Kühlung über eine zusätzliche Kühleinrichtung (347) beinhaltet, so dass beim Austritt aus der Vorrichtung zur radialen Aufweitung (34) ein radial aufgeweiteter Schlauch (23) bei einer Temperatur T2 typischerweise zwischen 10 °C und 60 °C und typischerweise bei Raumtemperatur vorliegt, wobei die zusätzliche Kühleinrichtung (347) typischerweise eine Kühlung des schlauchförmigen Metallteils (345) bzw. der Innenwand (342) mit dem Durchmesser D2 beinhaltet, wobei die Temperatur T2 niedrig genug sein muss, damit der aus der Vorrichtung zur radialen Aufweitung (34) austretende Schlauch mit dem Mittel zum axialen Strecken (35) gestreckt werden kann, ohne Gefahr von Bruch oder Ausdehnung für den radial aufgeweiteten Schlauch (23) mit dem Durchmesser D2.

16. Verfahren nach irgendeinem der Ansprüche 1 bis 15, bei dem der Durchmesser D0 der Extrusionsdüse zur Herstellung des extrudierten Schlauchs (21) typischerweise 20 mm bis 50 mm beträgt und ihre Schlitzbreite oder Dicke E0 typischerweise 0,5 mm bis 3 mm beträgt, so dass sich ein Kunststoffdurchsatz des Extruders (30) von typischerweise 10 kg bis 100 kg Kunststoff pro Stunde ergibt.

17. Verfahren nach irgendeinem der Ansprüche 1 bis 16, bei dem der Durchmesser D1 des axial gestreckten Schlauchs (22) typischerweise 5 bis 20 mm beträgt und seine Dicke E1 typischerweise 0,2 mm bis 0,6 mm beträgt, mit einem D1/D0-Verhältnis von höchstens 0,6 und mit einem E1/E0-Verhältnis von höchstens 0,6.

18. Verfahren nach irgendeinem der Ansprüche 1 bis 17, bei dem der Durchmesser D2 des radial aufgeweiteten Schlauchs (23) typischerweise 20 mm bis 50 mm beträgt und seine Dicke E2 0,05 mm bis 0,35 mm und typischerweise 0,075 mm bis 015 mm beträgt, mit einem D2/D1-Verhältnis von mindestens 2 und mit einem E2/E1-Verhältnis von höchstens 0,6.

19. Verfahren nach irgendeinem der Ansprüche 2 bis 18, bei dem die Vorrichtung zur radialen Aufweitung (34) in einer Entfernung L von der Extrusionsdüse angeordnet wird, wobei die Vorrichtung zur radialen Aufweitung (34) typischerweise entlang der Axialrichtung (25) bewegbar ist, wobei die Entfernung L so gewählt wird, insbesondere in Abhängigkeit vom Kunststoff, dass sich eine ausreichende Streckleistung in Axialrichtung ergibt und eine ausreichende Kühlung des axial gestreckten Schlauchs (22) erreicht wird.

20. Verfahren nach Anspruch 19, bei dem die Kühleinrichtung (32) in einer Entfernung L0 < L von der Extrusionsdüse angeordnet wird, wobei die Entfernung L0 so gewählt wird, insbesondere in Abhängigkeit vom Kunststoff, dass sich eine ausreichende Streckleistung in Axialrichtung ergibt, wobei die Kühleinrichtung typischerweise entlang der Axialrichtung (25) bewegbar ist, um eine Regelung des Durchmessers D1 am Eintritt der Vorrichtung zur radialen Aufweitung (34) durch eine Verstellung ΔL0 der Kühleinrichtung um diese Entfernung L0 herum zu erhalten.

21. Verfahren nach Anspruch 20, bei dem die Vorrichtung zur radialen Aufweitung (34) die mit dem Druck Pa unter Vakuum gesetzte Ringkammer (340') enthält und bei dem die Verstellung ΔL0 insbesondere von diesem Druck Pa abhängig ist, wobei jegliche Erhöhung des Drucks Pa eine negative Durchmesserabweichung ΔD1 vom Durchmesser D1 für den axial gestreckten Schlauch bedeutet, welche negative Abweichung ΔD1 durch eine negative Verstellung ΔL0 korrigiert werden kann, um den Durchmesser des axial gestreckten Schlauchs um ΔD1 zu erhöhen.

22. Verfahren nach irgendeinem der Ansprüche 20 bis 21, bei dem die Verstellung ΔL0 insbesondere von der axialen Streckkraft ft abhängig ist, die von dem Streckmittel ausgeübt wird, wobei jegliche Erhöhung oder positive Abweichung Δft von dieser Kraft ft typischerweise eine positive Durchmesserabweichung ΔD1 vom Durchmesser D1 des Schlauchs bedeutet, wobei der axial gestreckte Schlauch (22) dann einen Durchmesser aufweist, der größer ist als der Durchmesser beim Eintritt in die Vorrichtung zur radialen Aufweitung (34), wobei die positive Abweichung Δft durch eine positive Verstellung ΔL0 korrigiert werden kann, um den Durchmesser des axial gestreckten Schlauchs um ΔD1 zu verjüngen.

23. Verfahren nach irgendeinem der Ansprüche 1 bis 22, bei dem der thermoplastische Kunststoff (20) einen so genannten ersten thermoplastischen Kunststoff (200) enthält oder daraus besteht, der eine Glasübergangstemperatur Tg von mindestens 40°C aufweist und typischerweise unter PET, PVC, PS, PMMA oder ihren Gemischen oder PET-, PVC-, PS-, PMMA-Copolymeren gewählt wird.

24. Verfahren nach irgendeinem der Ansprüche 1 bis 23, bei dem der thermoplastische Kunststoff (20) einen so genannten zweiten thermoplastischen Kunststoff (201) enthält oder daraus besteht, der eine Glasübergangstemperatur Tg unterhalb 50°C und typischerweise unterhalb 10°C aufweist und typischerweise unter den Polyolefinen wie PE, PP, PB oder unter den Ethylen-Copolymeren wie EVA, EMA, EAA, den Ethylen-Propylen-Copolymeren oder unter den thermoplastischen Elastomeren wie SIS, SEBS oder ihren Gemischen gewählt wird.

25. Verfahren nach den Ansprüchen 23 bis 24, bei dem der thermoplastische Kunststoff (20) ein Gemisch aus dem ersten thermoplastischen Kunststoff (200) und dem zweiten thermoplastischen Kunststoff (201) enthält, wobei das Gemisch mindestens 20 Vol.-% des ersten thermoplastischen Kunststoffs (200) und 10 bis 50 Vol.-% des zweiten thermoplastischen Kunststoffs (201) enthält, um Kapseln (1, 1b, 1 c) bzw. Kappen (1a) zu erhalten, die je nach dem relativem Gehalt am ersten (200) und zweiten (201) thermoplastischen Kunststoff eine ganze Palette von Texturen und Flexibilitäten aufweisen.

26. Verfahren nach den Ansprüchen 23 bis 24, bei dem der thermoplastische Kunststoff (20) einen Mehrschichtwerkstoff bildet oder enthält, welcher Mehrschichtwerkstoff eine so genannte erste Schicht aus dem ersten thermoplastischen Kunststoff und eine zweite Schicht aus dem zweiten thermoplastischen Kunststoff aufweist, wobei der Mehrschichtwerkstoff eine haftende Innenschicht beinhalten kann.

27. Verfahren nach irgendeinem der Ansprüche 1 bis 26, bei dem der ganze oder ein Teil des thermoplastischen Kunststoffs (20) einen mikronisierten Füllstoff enthält, typischerweise gewählt unter Talk, Kalziumcarbonat, Bariumsulfat, Titanoxid, organischen oder mineralischen Pigmenten, nanopartikulären Tonen, um den thermoplastischen Kunststoff (20) zu färben.

28. Verfahren nach irgendeinem der Ansprüche 1 bis 27, bei dem der Schlauchabschnitt (24) im Schneidschritt c) ein so genannter kurzer Schlauchabschnitt (240) ist, wobei die geeignete Länge des Schlauchabschnitts (24) typischerweise so gewählt wird, dass sie in etwa der Höhe H der Kapsel entspricht, bei dem im Formgebungsschritt d) ein eben oder mit einem nach innen gewölbten Rand ausgebildetes Plättchen (5) zur Bildung des Kopfes (11) der Kapsel (1, 1b, 1c) bzw. Kappe (1a) bereitgestellt wird, und bei dem das Plättchen (5) mit dem Vorformling (26) für die Schürze verbunden wird, typischerweise durch Heißsiegeln mithilfe einer mit dem Dorn (40) zusammenwirkenden Matrize (42), wobei das Zusammenwirken von Matrize (42) und Dorn (40) eventuell eine Form- oder Reliefgebung des Plättchens (5) bewirkt.

29. Verfahren nach Anspruch 28, bei dem das Plättchen (5) durch Schneiden eines eventuell transparenten Folienmaterials (52) gewonnen wird, das aus einem Werkstoff besteht, der unter Kunststoffen, Metallbändern oder -folien, Papier oder Karton oder Mehrschichtverbindungen dieser Werkstoffe gewählt wird, wobei das Plättchen beliebige Arten von Systemen aufweisen kann, die es insbesondere ermöglichen, die Kapsel zu kennzeichnen, die Rückverfolgbarkeit der abgepackten Produkte zu verfolgen und zu gewährleisten, einen Diebstahl- und Verfälschungsschutz zu bilden.

30. Verfahren nach irgendeinem der Ansprüche 28 bis 29, bei dem das Plättchen (5) eine Steuerplakette ist.

31. Verfahren nach irgendeinem der Ansprüche 28 bis 30, bei dem das Plättchen (5) durch einen Einsatz (5') mit einem Kopf (50) und eventuell einer Schürze (51) ersetzt wird, wobei der Einsatz (5') am oberen Ende des Formdorns (40) angeordnet wird, typischerweise vor Aufschrumpfen des Schlauchabschnitts (24), um den Einsatz (5') mit dem Vorformling (26) für die Schrumpfschürze zu verbinden, eventuell mithilfe einer Haft- oder Heißsiegelschicht.

32. Verfahren nach Anspruch 31, bei dem der Einsatz (5') ein Gewinde (510) besitzt und ein Dichtmittel (511) aufweist, um eine Verschlusskapsel (1 b) zu bilden.

33. Verfahren nach irgendeinem der Ansprüche 1 bis 27, bei dem der Schlauchabschnitt im Schneidschritt c) ein so genannter langer Schlauchabschnitt (241) ist, wobei die geeignete Länge größer gewählt wird als die Höhe der Kapsel, wobei der Schlauchabschnitt (24) einen unteren Teil (242) zur Bildung der Schürze (12) der Kapsel (1, 1b, 1c) bzw. Kappe (1a) und einen oberen Teil (243) zur Bildung des Kopfes (11) der Kapsel (1, 1b, 1c) bzw. Kappe (1a) aufweist, wobei der Kopf (11) durch Pressen oder Formen des oberen Teils (243) zwischen einer Matrize (42) und einem Kopf (400) des Doms (40) ausgebildet wird.

34. Verfahren nach Anspruch 33, bei dem ein zusätzliches Teil (6), welches typischerweise ein Druckmuster, eine Verzierung oder ein Besteuerungsmittel bildet, vor dem Pressen in die Matrize (42) eingebracht wird, um den Kopf (11) auszubilden und gleichzeitig den Kopf (11) mit dem zusätzlichen Teil (6) zu verbinden.

35. Verfahren nach irgendeinem der Ansprüche 1 bis 34, bei dem der Aufdruck (13) auf dem Schlauchabschnitt (24) und/oder auf der Schürze (12) und/oder auf dem Kopf (11) und/oder auf dem Vorformling (26) für die Schrumpfschürze entweder vor oder nach dem Verbinden oder Formen des Kopfes (11) der Kapsel (1, 1 b, 1 c) bzw. Kappe (1 a) ausgebildet wird,

36. Verfahren nach Anspruch 35, bei dem durch Strahlung vernetzbare Druckfarben zur Ausbildung des Aufdrucks (13) verwendet werden, typischerweise UV-Druckfarben, so dass der Aufdruck (13) typischerweise bei einer Temperatur ausgebildet wird, die unter der Temperatur liegt, bei der die Kapsel unter Wärme schrumpft.

37. Verfahren nach irgendeinem der Ansprüche 35 bis 36, bei dem der Aufdruck (13) unter Verwendung einer Tintenstrahl- (7) oder Transferdruckvorrichtung ausgebildet wird, die eine Vielzahl von N Druckdüsen (70) parallel zur Axialrichtung oder Höhe H aufweist, welche Vielzahl aus einer Düsendichte (70) von mindestens 1 Düse je mm besteht, wobei die Druckvorrichtung typischerweise von einem Computer (71) gesteuert wird, der mit Mitteln zur digitalen Speicherung der auf die Kapsel (1, 1b, 1c) bzw. Kappe (1a) abzudruckenden Druckmuster (130) versehen ist, so dass mehrere verschiedene Druckmuster (130) gleichzeitig aufgedruckt werden können, das Druckmuster (130) sofort gewechselt werden kann und so eventuell sehr kurze Serien von Kapseln (1, 1b, 1c) bzw. Kappen (1a) bedruckt werden können.

38. Verfahren nach irgendeinem der Ansprüche 1 bis 37, bei dem der ganze oder ein Teil des thermoplastischen Kunststoffs (20, 200, 201) einen in der Masse gefärbten thermoplastischen Kunststoff enthält.

39. Verfahren nach irgendeinem der Ansprüche 26 bis 38, bei dem der Mehrschichtwerkstoff eine Außenschicht aus einem typischerweise polaren Kunststoff oder einem Kunststoff mit hoher Oberflächenenergie aufweist, so dass die Außenschicht bedruckt werden kann und dabei ein an der Außenschicht haftenden Dekor entsteht.

40. Verfahren nach irgendeinem der Ansprüche 1 bis 39, bei dem die Schürze (12) ein Mittel zum leichten Öffnen (14) mit typischerweise zwei voneinander beabstandeten Schwächungslinien (140) zur Bildung eines Öffnungsstreifens (141) aufweist, der mit einem Endstück zum manuellen Greifen (142) versehen ist.

41. Verfahren nach irgendeinem der Ansprüche 1 bis 40, bei dem das Mittel zum axialen Recken (35) zwei Antriebsröllchen (350) oder zwei kleine Raupen aufweist.
